# EUROPEAN PATENT APPLICATION

(11) **EP 4 422 328 A1**
(43) Date of publication of application: **28.08.2024**
(21) Application number: 22883306.7
(22) Date of filing: 28.09.2022
(51) Int. Cl.: H04W 74/08, H04B 7/06, H04W 16/28, H04W 48/10, H04W 56/00

(54) **WIRELESS TERMINAL, WIRELESS ACCESS NETWORK NODE, AND METHODS THEREFOR**

(30) Priority: 20.10.2021 JP 2021171920
(71) Applicant: NEC Corporation, 108-8001 Tokyo (JP)
(72) Inventor: FUTAKI Hisashi, Tokyo 108-8001 (JP)
(74) Representative: MacDougall, Alan John Shaw
(86) International application number: PCT/JP2022/036156
(87) International publication number: WO 2023/067998

(57) **Abstract**

A radio terminal (1) selects, from a plurality of beam-formed beams, a beam having a Reference Signal Received Power (RSRP) greater than a first RSRP threshold associated with a selected, desired, or intended feature or feature combination. The radio terminal (1) performs a random access preamble transmission using a first random access resource corresponding to the selected beam. This can help, for example, to enable a radio terminal to consider a feature or a feature combination or both in beam selection.

## Description

### Technical Field

The present disclosure relates to radio communication networks, and in particular to random access.

### Background Art

The 3rd Generation Partnership Project (3GPP (registered trademark)) Radio Access Network (RAN) Working Group is currently considering support for additional random access resource partitioning. This functionality will be introduced in 3GPP Release 17 (see, for example, Non-Patent Literature 1-4). Random Access Resource Partitioning partitions the random access resources used for random access preamble transmission. Random Access Resource Partitioning allows a radio terminal (e.g., User Equipment (UE)) to provide information to a radio access network node (e.g., gNB, eNB) by means of the resources used in the random access preamble transmission.

In this specification, random access resources refer to random access preambles, or combinations of random access occasions and random access preambles. Random access resource partitioning is also referred to as Random Access Channel (RACH) resource partitioning or RACH partitioning. Random access occasions are also referred to as RACH occasions (ROs) and random access preambles are also referred to as RACH preambles. A RACH occasion is the time and frequency resources for a RACH preamble transmission. According to the current 3GPP Release 15 and Release 16 specifications, there are up to 64 RACH preambles in a RACH occasion that can be used for transmission.

With 3GPP Release 16 RACH partitioning, the UE can inform the gNB of the following information, depending on which RACH preamble is used:
- Selected Synchronization Signal (SS)/Physical Broadcast Channel (PBCH) block (SSB) (or selected beam);
- Contention-Free Random Access (CFRA) or Contention-Based RA (CBRA) cause;
- Payload size (preamble group B configured or not);
- Random access type (2-step or 4-step RA).

Additional RACH partitioning is being considered for some Release 17 features to allow the network to identify the features early. These features include, for example, Reduced Capability (RedCap), Small Data Transmission (SDT), Coverage Enhancement (CE or CovEnh), and Slicing. All of the RACH resource partitions that result from possible feature combinations or combinations of features need to be configured. For example, possible feature combinations include RedCap + SDT, RedCap + CovEnh, RedCap + Slicing, RedCap + SDT + CovEnh, RedCap + SDT + Slicing, RedCap + CovEnh + Slicing, and so on. A feature can be called a functional feature.

The RedCap indication in RACH is used to indicate reduced capabilities to the network in the first RACH message (MSG1 in 4-step RA, MSGA in 2-step RA), allowing the network to adapt subsequent transmissions.

The SDT indication in RACH is used to indicate SDT to the network and to request a larger third RACH message (MSG3) size. Alternatively, the SDT indication is used to indicate a larger MSGA size (i.e., the size of the data portion of the MSGA) in the case of a 2-step RA.

The CovEnh indication in RACH is used to indicate the need for coverage enhancement, for example, to request a repetition of the third RACH message (MSG3 in 4-step RA). The CovEnh indication can be binary information to indicate whether a Msg3 PUSCH repetition is required or not.

The slicing indication in RACH is used to indicate a higher-priority slice to the network and to achieve slice isolation even for RACH. The slicing indication can be binary information to distinguish between prioritized and non-prioritized network slices. Alternatively, the slicing indication may indicate a multi-level slice priority, a selected or intended network slice, or a selected or intended network slice group, which would further increase the number of partitions.

### Citation List

### Non Patent Literature

[Non-Patent Literature 1] ZTE Corporation, "RRC and MAC related aspects of common RACH configuration", R2-2107484, 3GPP TSG-RAN WG2 #115e, Electronic meeting, August 16 - 27, 2021
[Non-Patent Literature 2] NEC, "General aspects of RACH indication and partitioning", R2-2108138, 3GPP TSG-RAN WG2 #115e, Electronic meeting, August 16 - 27, 2021
[Non-Patent Literature 3] Ericsson, "RACH partitioning for Rel-17 features", R2-2108253, 3GPP TSG-RAN WG2 #115e, Electronic meeting, August 16 - 27, 2021
[Non-Patent Literature 4] InterDigital, "Report for Rel-17 Small data and URLLC/IIoT", R2-2108834, 3GPP TSG-RAN WG2 #115e, Electronic meeting, August 16 - 27, 2021

### Summary of Invention

### Technical Problem

The inventor has studied the random access resource partitioning for Release 17 features and feature combinations and found various problems.

One of these problems concerns SSB beam selection. According to the provisions of Release 15 and Release 16, the UE performs beam selection based on a Reference Signal Received Power (RSRP) threshold when selecting random access resources during initial attach. Specifically, the gNB transmits sequences of SSB beams in different directions. The different beams transmitted by the gNB are associated with (or mapped to) different SSBs or different SSB indices. From these multiple SSB beams, the UE selects an SSB (or beam) having an SS-RSRP greater than an RSRP threshold (i.e., rsrp-ThresholdSSB or msgA-RSRP-ThresholdSSB). The UE then starts random access preamble transmission using a RACH resource associated with (or mapped to) the selected SSB (or SSB index). However, it is not clear how the new features or feature combinations to be introduced in Release 17 will be considered in the SSB (or beam) selection.

Another one of these problems concerns uplink carrier selection. According to the provisions of Release 15 and Release 16, the UE chooses between Normal Uplink (NUL) and Supplementary Uplink (SUL) carriers prior to random access resource selection. If the UE is required to perform a feature or feature combination aware random access resource selection after the selection between the NUL and SUL carriers has been made, the network (e.g., gNB) may always need to configure the same feature combinations for the NUL and SUL carriers. In other words, the same feature combinations may need to be supported on both the NUL and SUL carriers. However, as described in Non-Patent Literature 4, the carrier selection may not need to be supported, for example, for Coverage Enhancement. Therefore, it is not clear how to coordinate the random access resource selection based on Release 17 features or feature combinations with the selection between NUL and SUL carriers.

Still another of these problems concerns the fragmentation of random access resources. In general, the number of random access resource partitions increases exponentially with the number of features. If a cell is required to provide separate random access partitions for all Release 17 features and all possible feature combinations, the number of available random access resources (e.g., RACH preambles) within each partition may be quite small. Discussions to date in the 3GPP RAN Working Group are not clear on how to address this issue.

One of the objects to be attained by example embodiments disclosed herein is to provide apparatuses, methods, and programs that contribute to solving at least one of a plurality of problems related to random access resource partitioning, including the problems described above. It should be noted that this object is merely one of the objects to be attained by the example embodiments disclosed herein. Other objects or problems and novel features will be made apparent from the following description and the accompanying drawings.

### Solution to Problem

In a first aspect, a radio terminal includes at least one memory and at least one processor coupled to the at least one memory. The at least one processor is configured to select, from a plurality of beam-formed beams, a beam having a Reference Signal Received Power (RSRP) greater than a first RSRP threshold associated with a selected, desired, or intended feature or feature combination. The at least one processor is configured to perform a random access preamble transmission using a first random access resource corresponding to the selected beam. The feature is Reduced Capability (RedCap), Small Data Transmission (SDT), Coverage Enhancement (CovEnh), or Slicing. The feature combination includes at least two of RedCap, SDT, CovEnh, or Slicing.

In a second aspect, a method performed by a radio terminal includes (a) selecting, from a plurality of beam-formed beams, a beam having an RSRP greater than a first RSRP threshold associated with a selected, desired, or intended feature or feature combination, and (b) performing a random access preamble transmission using a first random access resource corresponding to the selected beam. The feature is RedCap, SDT, CovEnh, or Slicing. The feature combination includes at least two of RedCap, SDT, CovEnh, or Slicing.

In a third aspect, a radio access network (RAN) node includes at least one memory and at least one processor coupled to the at least one memory. The at least one processor is configured to broadcast in a cell a first RSRP threshold associated with a feature or a feature combination. The first RSRP threshold is used by a radio terminal to select a beam having an RSRP greater than the first RSRP threshold from a plurality of beam-formed beams and to perform a random access preamble transmission using a first random access resource corresponding to the selected beam. The feature is RedCap, SDT, CovEnh, or Slicing. The feature combination includes at least two of RedCap, SDT, CovEnh, or Slicing.

In a fourth aspect, a method performed by a RAN node includes broadcasting in a cell a first RSRP threshold associated with a feature or a feature combination. The first RSRP threshold is used by a radio terminal to select a beam having an RSRP greater than the first RSRP threshold from a plurality of beam-formed beams and to perform a random access preamble transmission using a first random access resource corresponding to the selected beam. The feature is RedCap, SDT, CovEnh, or Slicing. The feature combination includes at least two of RedCap, SDT, CovEnh, or Slicing.

In a fifth aspect, a radio terminal includes at least one memory and at least one processor coupled to the at least one memory. The at least one processor is configured to, if both a Normal Uplink (NUL) carrier and a Supplementary Uplink (SUL) carrier support a selected, desired, or intended feature or feature combination, select one of the NUL carrier and the SUL carrier based on a downlink measurement result, otherwise select one of the NUL carrier and the SUL carrier that supports the feature or the feature combination. The at least one processor is configured to perform a random access preamble transmission using a random access resource associated with the selected uplink carrier.

In a sixth aspect, a method performed by a radio terminal includes the steps of:
(a) if both an NUL carrier and an SUL carrier support a selected, desired, or intended feature or feature combination, selecting one of the NUL carrier and the SUL carrier based on a downlink measurement result, otherwise selecting one of the NUL carrier and the SUL carrier that supports the feature or the feature combination; and
(b) performing a random access preamble transmission using a random access resource associated with the selected uplink carrier.

In a seventh aspect, a radio terminal includes at least one memory and at least one processor coupled to the at least one memory. The at least one processor is configured to select an uplink carrier from NUL and SUL carriers based on a downlink measurement result. The at least one processor is configured to, if the selected uplink carrier does not support a selected, desired, or intended feature combination, perform a random access preamble transmission using a random access resource associated with a feature subset included in the feature combination.

In an eighth aspect, a method performed by a radio terminal includes the steps of:
(a) selecting an uplink carrier from an NUL carrier and an SUL carrier based on a downlink measurement result; and
(b) if the selected uplink carrier does not support a selected, desired, or intended feature combination, performing a random access preamble transmission using a random access resource associated with a feature subset included in the feature combination.

In a seventh aspect, a radio terminal includes at least one memory and at least one processor coupled to the at least one memory. The at least one processor is configured to, if a first set of random access resources associated with a selected, desired, or intended feature combination is configured, perform a random access preamble transmission using a random access resource selected from the first set. The at least one processor is configured to, if the first set is not configured, perform a random access preamble transmission using a random access resource selected from a second set of random access resources associated with a feature subset included in the feature combination.

In a tenth aspect, a method performed by a radio terminal includes the steps of:
(a) if a first set of random access resources associated with a selected, desired, or intended feature combination is configured, performing a random access preamble transmission using a random access resource selected from the first set; and
(b) if the first set is not configured, performing a random access preamble transmission using a random access resource selected from a second set of random access resources associated with a feature subset included in the feature combination.

In an eleventh aspect, a radio terminal includes at least one memory and at least one processor coupled to the at least one memory. The at least one processor is configured to, if a first set of random access resources associated with a selected, desired, or intended feature or feature combination is configured, perform a random access preamble transmission using a random access resource selected from the first set. The at least one processor is configured to, if the first set is not configured, perform a random access preamble transmission using a random access resource selected from a second set of random access resources not associated with the feature or the feature combination.

A twelfth aspect is directed to a program. The program includes a set of instructions (software codes) that, when loaded into a computer, cause the computer to perform the method described in the second, fourth, sixth, eighth, tenth, or twelfth aspect.

### Advantageous Effects of Invention

According to the aspects described above, it is possible to provide apparatuses, methods and programs that contribute to solving at least one of a plurality of problems related to random access resource partitioning.

### Brief Description of Drawings

Fig. 1 shows an example configuration of a radio communication system according to an example embodiment;
Fig. 2 shows an example of a control plane protocol stack of a radio terminal according to an example embodiment;
Fig. 3 is a flowchart showing an example of the operation of a radio terminal according to an example embodiment;
Fig. 4 is a sequence diagram showing an example of the operation of a radio terminal and a radio access network node according to an example embodiment;
Fig. 5 is a flowchart showing an example of the operation of a radio terminal according to an example embodiment;
Fig. 6 is a flowchart showing an example of the operation of a radio terminal according to an example embodiment;
Fig. 7 is a flowchart showing an example of the operation of a radio terminal according to an example embodiment;
Fig. 8 is a flowchart showing an example of the operation of a radio terminal according to an example embodiment;
Fig. 9 is a flowchart showing an example of the operation of a radio terminal according to an example embodiment;
Fig. 10 is a flowchart showing an example of the operation of a radio terminal according to an example embodiment;
Fig. 11 is a flowchart showing an example of the operation of a radio terminal according to an example embodiment;
Fig. 12 is a block diagram showing an example configuration of a radio terminal according to an example embodiment; and
Fig. 13 is a block diagram showing an example configuration of a radio access network node according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

The multiple example embodiments described below may be implemented independently or in combination, as appropriate. These example embodiments include novel features different from each other. Accordingly, these example embodiments contribute to attaining objects or solving problems different from one another and contribute to obtaining advantages different from one another.

The example embodiments shown below are described primarily for the 3GPP fifth generation mobile communication system (5G system). However, these example embodiments may be applied to other radio communication systems.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

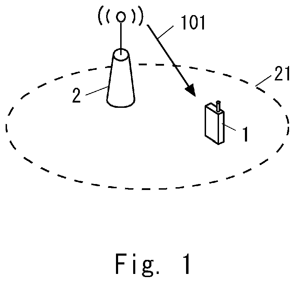

First, the configuration and operation of a plurality of network elements common to a plurality of example embodiments will be described. Fig. 1 illustrates an example of the configuration of a radio communication system related to a plurality of example embodiments. In the example of Fig. 1, the radio communication system includes a radio terminal (i.e., UE) 1 and a radio access network (RAN) node (e.g., gNB) 2. Each of the elements (network functions) shown in Fig. 1 can be implemented, for example, as a network element on dedicated hardware, as a software instance running on dedicated hardware, or as a virtualized function instantiated on an application platform.

The UE 1 has at least one radio transceiver and is configured to perform cellular communications with the RAN node 2. The RAN node 2 is configured to manage a cell 21 and to perform cellular communications with a plurality of UEs, including the UE 1, using a cellular communication technology (e.g., NR Radio Access Technology (RAT)).

The RAN Node 2 may be a Central Unit (e.g., gNB-CU) in a Cloud RAN (C-RAN) deployment, or a combination of a CU and one or more Distributed Units (e.g., gNB-DUs). C-RAN is also referred to as CU/DU split. In addition, a CU may include a Control Plane (CP) unit (e.g., gNB-CU-CP) and one or more User Plane (UP) units (e.g., gNB-CU-UP). Accordingly, the RAN nodes 2 may be a CU-CP or a combination of a CU-CP and a CU-UP. A CU may be a logical node that hosts the Radio Resource Control (RRC), Service Data Adaptation Protocol (SDAP), and Packet Data Convergence Protocol (PDCP) protocols of a gNB (or the RRC and PDCP protocols of a gNB). A DU may be a logical node that hosts the Radio Link Control (RLC), Medium Access Control (MAC), and Physical (PHY) layers of a gNB.

The RAN node 2 transmits signals containing system information (SI) 101 and other signals in the cell 21. The system information 101 includes a Master Information Block (MIB) and a number of System Information Blocks (SIBs). The system information 101 is divided into Minimum SI and Other SI. The Minimum SI is always broadcast periodically and includes basic information required for initial access and information for acquiring any other SI. The Other SI includes all SIBs not broadcast in the Minimum SI. Specifically, the Minimum SI includes MIB and SIB Type 1 (SIB1), and the Other SI includes SIB types from SIB Type 2 (SIB2) and later. Each SIB in the Other SI is either always broadcast periodically, broadcast on demand upon request from UEs in RRC_IDLE or RRC_INACTIVE, or sent to UEs in RRC_CONNECTED via dedicated RRC signaling. If the RAN node 2 is in a C-RAN deployment, a DU (e.g., gNB-DU) may generate at least part of the system information (e.g., MIB, SIB1). The DU may transmit the generated system information directly to the UE 1 or to the CU (e.g., gNB-CU) to enable the CU to transmit it to the UE 1 (via the DU).

In the example in Fig. 1, the UE 1 has selected or reselected the cell 21 of the RAN node 2 and has camped on to cell 21. In other words, the cell 21 is a serving cell of the UE 1. The serving cell of the UE 1 can be referred to as a cell on which the UE 1 is camping. A serving cell is sometimes referred to as a camped cell. If a UE in RRC_IDLE or RRC_INACTIVE succeeds in selecting a suitable cell to camp on according to cell selection criteria or cell reselection criteria, it camps on that cell. Camping on to a cell means that the UE has completed the cell selection or reselection process and has chosen a cell. In other words, the term "camp on" means that the UE has stayed in a cell and is ready to initiate a potential dedicated service in that cell.

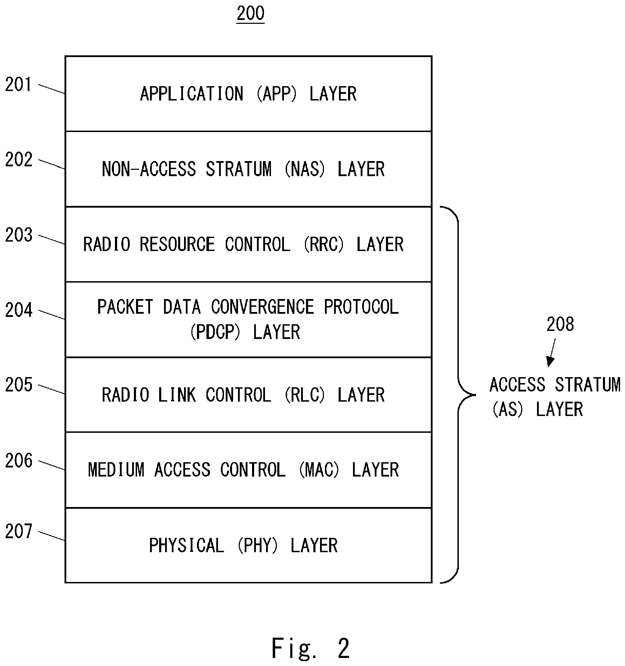

Fig. 2 shows an example of the control plane protocol stack of the UE 1. The control plane protocol stack 200 of the UE 1 includes an Application (APP) layer 201, a Non-Access Stratum (NAS) layer 202, and an Access Stratum (AS) layer 208. The AS layer 208 includes an RRC layer 203, a PDCP layer 204, an RLC layer 205, a MAC layer 206, and a PHY layer 207.

The NAS layer 202 utilizes data communication over a radio interface and management of the radio interface provided by the AS layer 208 and communicates with a core network (i.e., 5G Core (5GC)) via the RAN node 2 according to the 5G System (5GS) Mobility Management (5GMM) protocols and the 5GS Session Management (5 GSM) protocols. The 5GMM protocol runs between the UE 1 and an Access and Mobility Management Function (AMF) within the 5GC and is used for UE registration, mobility, and transport of 5GSM protocol messages. The 5GSM protocol runs between the UE 1 and a Session Management Function (SMF) within the 5GC via the AMF and supports management of PDU Session connectivity.

The NAS layer 202 communicates with the RRC layer 203 to utilize services provided by the AS layer 208 (i.e., data communication over the radio interface between the UE 1 and the RAN node 2 and management of the radio interface). The RRC layer 203 is a lower layer of the NAS layer 202 and provides radio resource control (RRC) and manages the RRC state (i.e., RRC_IDLE, RRC_INACTIVE, and RRC_CONNECTED) of the UE 1.

The AS layer 208 initiates an RRC connection establishment procedure or an RRC connection resume procedure in response to a request from the NAS layer 202 or on a voluntary basis. For example, in response to receiving a PDU Session establishment request from an upper layer (i.e., Application layer 201), if the 5GS mobility management (5GMM) mode of the UE 1 is 5GMM-IDLE, the NAS layer 202 initiates a registration procedure or a service request procedure to transition to 5GMM-CONNECTED mode and attempt to transmit an initial NAS message (e.g., a registration request message or a service request message) to the AMF. The initial NAS message from the NAS layer 202 triggers the AS layer 208 to establish an RRC connection between the UE 1 and the RAN node 2. If the 5GMM mode is 5GMM-CONNECTED or 5GMM-CONNECTED with RRC inactive indication, the NAS layer 202 attempts to transmit a NAS message (e.g., PDU SESSION ESTABLISHMENT REQUEST message, UL NAS TRANSPORT message, PDU SESSION MODIFICATION REQUEST, or SERVICE REQUEST message) depending on the event that triggered the access attempt. Alternatively, if the 5GMM mode is 5GMM-CONNECTED or 5GMM-CONNECTED with RRC inactive indication and the access attempt is "an uplink user data packet is to be sent for a PDU session with suspended user-plane resources", the NAS layer 202 requests the AS layer 208 to make a transition to RRC_CONNECTED in order to transmit an uplink user data packet (Mobile Originated (MO) data).

In response to receiving an initial NAS message or a request for transition to RRC_CONNECTED, the RRC layer 203 requests or triggers the MAC layer 206 to initiate a random access procedure to transmit an RRC message for establishing or resuming the RRC connection (i.e., RRC Setup Request message or RRC Resume Request message). Prior to this, the RRC layer 203 may perform one or more access barring checks. Subject to passing the access barring checks, the RRC layer 203 may request the MAC layer 206 to initiate a random access procedure. The access barring methods include, for example, Access Class Barring (ACB), Extended Access Barring (EAB), Application specific Congestion control for Data Communication (ACDC), and Unified Access Control (UAC). The RRC layer 203 may perform barring checks for one or more of these access barring methods.

The MAC layer 206 receives a trigger for a random access procedure from the RRC layer 203 based on an event such as the reestablishment and resumption of an RRC connection, and initiates the random access procedure accordingly. The MAC layer 206 may initiate a random access procedure by the MAC layer 206 itself or by a Physical Downlink Control Channel (PDCCH) order.

In a random access procedure, the MAC layer 206 selects a single RACH resource to be used for RACH preamble transmission from a set of partitioned random access resources (RACH resources). The set of RACH resources includes RACH preambles, or combinations of RACH occasions and RACH preambles. A RACH occasion is time and frequency resources for a RACH preamble transmission. According to the current 3GPP Release 15 and Release 16 specifications, there are up to 64 RACH preambles in a RACH occasion that can be used for transmission.

The MAC layer 206 requests the PHY layer 207 to transmit a random access preamble (RACH preamble) on the selected RACH resource. The random access procedure further includes Random Access Response (RAR) reception and contention resolution.

The MAC layer 206 may follow the RACH partitioning of 3GPP Release 16. With 3GPP Release 16 RACH partitioning, the UE can inform the gNB of the following information, depending on which RACH preamble is used:
- Selected Synchronization Signal (SS)/Physical Broadcast Channel (PBCH) block (SSB) (or selected beam);
- Contention-Free Random Access (CFRA) or Contention-Based RA (CBRA) cause;
- Payload size (preamble group B configured or not);
- Random access type (2-step or 4-step RA).

In addition, the MAC layer 206 supports additional RACH partitioning for Release 17 features. This allows the RAN node 2 to identify at an early stage the Release 17 features or feature combinations selected, desired, or intended by the UE 1. For example, a RACH resource partition is configured for each of all or a subset of the Release 17 features, as well as for each of the possible feature combinations or combinations of features. Each Release 17 feature is, for example, Reduced Capability (RedCap), Small Data Transmission (SDT), Coverage Enhancement (CE or CovEnh), or Slicing. For example, a feature combination includes at least two of RedCap, SDT, CovEnh, or Slicing. The term "feature" as used in the remainder of this specification means any one of these Release 17 features, unless otherwise noted. Similarly, the term "feature combination" means a combination consisting of at least two of these Release 17 features, unless otherwise noted. A "feature combination" may be referred to as a "feature set" or a "set of features.

The RedCap indication in RACH is used to indicate reduced capabilities to the network in the first RACH message (MSG1 in 4-step RA, MSGA in 2-step RA), allowing the network to adapt subsequent transmissions. Note that the 3GPP RAN Working Group is currently considering support for RedCap UEs by New Radio (NR), which will be introduced in 3GPP Release 17. The introduction of RedCap NR devices will enable support for use cases that are not optimally served by the current NR standard. Use cases motivating the NR RedCap standardization effort include wearables (e.g., smart watches, wearable medical devices, Augmented Reality (AR)/Virtual Reality (VR) goggles), industrial wireless sensors, and video surveillance. These use cases have less stringent data rate requirements than the enhanced mobile broadband (eMBB) use case and do not have the tight or deterministic latency requirements of the time-critical communications use case. Thus, there is room to trade off device features for complexity or cost savings compared to Release 15 NR devices as a baseline. According to the currently proposed capabilities of the RedCap devices, the maximum device bandwidth, the minimum number of device receive branches, the maximum number of downlink MIMO layers, and the maximum downlink modulation order may be reduced or relaxed compared to those of the Release 15 NR devices.

The SDT indication in RACH is used to indicate SDT to the network and to request a larger third RACH message (MSG3) size. Alternatively, the SDT indication is used to indicate a larger MSGA size (i.e., the size of the data portion of the MSGA) in the case of a 2-step RA. In addition, two different sizes of MSG3 or MSGA may be possible, as in the RACH in 3GPP Release 15/16. In this case, the SDT indication in the RACH may further indicate the size of the MSG3 or MSGA. The SDT, which is also referred to as the SDT in inactive state, is one of the new features to be introduced in 3GPP Release 17. It allows UEs in RRC_INACTIVE to transmit infrequent and small data without requiring an RRC state transition.

The CovEnh indication in RACH is used to indicate the need for coverage enhancement, for example, to request a repetition of the third RACH message (MSG3 in 4-step RA). The CovEnh indication can be binary information to indicate whether a Msg3 PUSCH repetition is required or not. Alternatively, the CovEnh indication may indicate one of multiple coverage enhancement (CE) levels. The CovEnh indication may indicate one of two or more CE level groups (or CE modes). A CE level group or CE mode includes one or more CE levels. For example, the CE specified in 3GPP Release 14 supports up to four CE levels (i.e., CE levels 0 to 3). The UE determines its CE level on the basis of a measured RSRP level. CE level 0 is associated with the highest RSRP threshold and CE level 3 is associated with the lowest RSRP threshold. In other words, UEs at CE level 0 enjoy relatively low path loss and high downlink received power, while UEs at CE level 3 enjoy relatively high path loss and low downlink received power.

The slicing indication in RACH is used to indicate a higher-priority slice to the network and to achieve slice isolation even for RACH. The slicing indication can be binary information to distinguish between prioritized and non-prioritized network slices. Alternatively, the slicing indication may be information indicating one of three or more multi-level slice priorities. The slicing indication may indicate a network slice or network slice group selected or intended by the UE 1. A network slice group includes one or more network slices.

Network slicing uses Network Function Virtualization (NFV) and software-defined networking (SDN) technologies to create multiple virtualized logical networks on top of physical networks. Each virtualized logical network, called a network slice or network slice instance, contains logical nodes and functions, and is used for specific traffic and signaling. A network slice may be a network slice provided by a core network (e.g., 5GC). Multiple network slices are distinguished, for example, by the services or use cases provided to the UE 1 on the respective network slice. The use cases include, for example, enhanced Mobile Broad Band (eMBB), Ultra-Reliable and Low Latency Communication (URLLC), and massive Machine Type Communication (mMTC). These are referred to as slice types (e.g., Slice/Service Type (SST)). The RAN node 2 may allocate to the UE 1 a RAN slice and a radio slice associated with the network slice of the core network selected for the UE 1, in order to provide end-to-end network slicing to the UE 1. In view of the above, the slicing indication in the RACH may be information about a network slice in the core network, information about a RAN or radio slice, or information about an end-to-end network slice.

A network slice may be specified by Network Slice Selection Assistance Information (NSSAI) or Single NSSAI (S-NSSAI). This is communicated, for example, from the core network (e.g., 5GC) to the NAS layer 202 of the UE 1, and from the NAS layer 202 of the UE 1 to the AS layer 208 (e.g., RRC). A network slice selected and intended by the UE 1 may be referred to as a selected NSSAI and an intended NSSAI, respectively. A selected network slice (selected NSSAI) may be referred to as an allowed NSSAI, meaning a network slice that has been allowed for use by the core network. An SST can be contained in an S-NSSAI (i.e., an S-NSSAI contains information about an SST).

More specifically, each of the network slices selected or intended by the UE 1 may be specified by an identifier known as Single Network Slice Selection Assistance Information (S-NSSAI). A selected or intended network slice(s) may be an S-NSSAI(s) included in a Configured NSSAI, or an S-NSSAI(s) included in an Allowed NSSAI. Note that S-NSSAIs in a Requested NSSAI included in a NAS registration request message should be part of a Configured NSSAI and/or an Allowed NSSAI. Accordingly, an intended network slice(s) may be S-NSSAI(s) included in a Requested NSSAI.

A Configured NSSAI contains one or more S-NSSAIs, each of which is applicable to one or more Public Land Mobile Networks (PLMNs). For example, a Configured NSSAI is configured by a Serving PLMN and applied to that Serving PLMN. An Allowed NSSAI specifies one or more S-NSSAIs that are provided to the UE 1 by a Serving PLMN and can be used by the UE 1 in the current Registration Area of that Serving PLMN. A Configured NSSAI may be a Default Configured NSSAI. A Default Configured NSSAI is configured by the Home PLMN (HPLMN) and applies to any PLMNs for which a specific Configured NSSAI has not been provided. The UE 1 may be preconfigured with a Default Configured NSSAI. The UE 1 may be provisioned or updated with a Default Configured NSSAI as determined by a Unified Data Management (UDM) in the HPLMN. An Allowed NSSAI is determined by an AMF of a Serving PLMN, e.g., during a registration procedure. An Allowed NSSAI is signaled to the UE 1 by the network (i.e., AMF) and stored in a (non-volatile) memory of the AMF and the UE 1, respectively.

In some implementations, the AS layer 208 may determine or select a feature combination. In one example, the RRC layer 203 of the UE 1 may determine or select a feature combination. Specifically, the RRC layer 203 of the UE 1 may determine a feature combination and indicate the determined feature combination to the MAC layer 206 of the UE 1. Alternatively, the final determination or selection of a feature combination may be performed by the MAC layer 206 of the UE 1. Specifically, the RRC layer 203 of the UE 1 may determine one or more features to be included in a feature combination and may indicate the determined one or more features to the MAC layer 206 of the UE 1. The MAC layer 206 may further determine required features and determine the feature combination.

In other implementations, the NAS layer 202 may determine or select a feature combination. The NAS layer 208 may indicate the feature combination to the AS layer 208 (e.g., RRC layer 203).

### First Example Embodiment

The example configuration of a radio communication system in this example embodiment may be similar to the example shown in Fig. 1. The control plane protocol stack of the UE 1 may be similar to the example shown in Fig. 2.

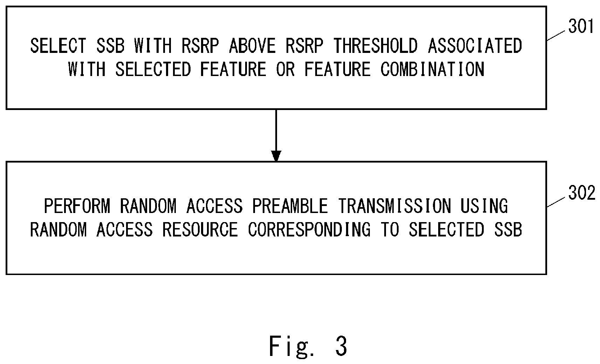

Fig. 3 shows an example of the operation of the UE 1 in a random access procedure. Step 301 relates to RACH resource selection performed by the MAC layer 206 of the UE 1. In step 301, the MAC layer 206 of the UE 1 selects an SSB having an RSRP greater than an RSRP threshold associated with a feature or feature combination selected, desired, or intended by the UE 1. The SSB selection may be referred to as beam selection, or SSB beam selection. Different beams transmitted by the RAN node 2 are associated with (or mapped to) different SSBs or different SSB indices. If no SSB has an RSRP that exceeds the RSRP threshold, the UE 1 can select any SSB. The selected, desired, or intended feature or feature combination may be passed from the RRC layer 203 to the MAC layer 206.

The RSRP threshold may be, for example, an rsrp-ThresholdSSB associated with a particular feature or feature combination, or an msgA-RSRP-ThresholdSSB associated with a particular feature or feature combination. The rsrp-ThresholdSSB is an RSRP threshold for selecting an SSB for 4-step RA. The msgA-RSRP-ThresholdSSB is an RSRP threshold for selecting an SSB for 2-step RA.

The name of the RSRP threshold associated with a particular feature can be defined to identify that feature. For example, the name may be redCap-rsrp-ThresholdSSB, sdt-rsrp-ThresholdSSB, covEnh-rsrp-ThresholdSSB, and slicing-rsrp-ThresholdSSB (or slice-rsrp-ThresholdSSB). For each feature, one or more RSRP thresholds can be configured for SSB selection.

Similarly, the name of the RSRP threshold associated with a particular feature combination can be defined to identify that feature combination. For example, in the case of a combination of RedCap and SDT, the name may be redCap-sdt-rsrp-ThresholdSSB. In the case of a combination of Coverage enhancement and Slicing, the name may be covEnh-Slicing-rsrp-ThresholdSSB. The case of a feature combination that includes three or more features can be specified in a similar way. If a feature combination includes a feature that does not require a specific (individual) RSRP threshold, this feature may or may not be indicated in the threshold name.

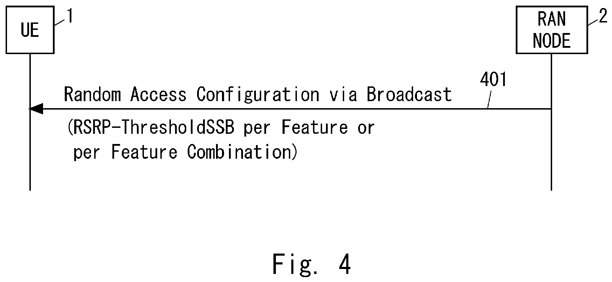

The RAN node 2 may configure the UE 1 with an RSRP threshold (e.g., rsrp-ThresholdSSB or msgA-RSRP-ThresholdSSB or both) on a per-feature basis. Specifically, the RAN node 2 may broadcast a random access configuration in the cell 21, as shown in step 401 of Fig. 4. The random access configuration may include, for example, a RACH-ConfigCommon information element (IE) or may include an IE (e.g., RACH-ConfigFeatureCombination) which is newly specified in a BWP-UplinkCommon IE. The random access configuration may be included in SIB1. For example, the random access configuration includes a plurality of RSRP thresholds, each associated with one of a plurality of features or with one of one or more combinations of two or more features included in the plurality of features. In other words, each of these multiple RSRP thresholds is associated with any feature or any feature combination. Each of these multiple RSRP thresholds is used by the UE 1 to select an SSB (or beam). The RRC layer 203 of the UE 1 provides the plurality of RSRP thresholds included in the random access configuration to the MAC layer 206. The MAC layer 206 selects the RSRP threshold associated with (or corresponding to) a selected feature or feature combination from the plurality of RSRP thresholds.

Returning to Fig. 3, in step 302, the UE 1 performs a random access preamble (or RACH preamble) transmission using a random access resource (or RACH resource) corresponding to the selected SSB. Specifically, the MAC layer 206 of the UE 1 selects a RACH resource for the preamble transmission from a set of RACH resources within a RACH resource partition. This RACH resource partition is the RACH resource partition associated with the selected SSB and associated with the selected feature or feature combination. The MAC layer 206 of the UE 1 requests the PHY layer 207 to transmit a RACH preamble on the selected RACH resource.

According to the operation of UE 1 described with reference to Fig. 3, UE 1 uses RSRP thresholds for SSB (or beam) selection that are per new feature or per feature combination introduced in 3GPP Release 17. Thus, the operation of the UE 1 described with reference to Fig. 3 allows the UE 1 to consider features or feature combinations or both newly introduced in 3GPP Release 17 in SSB (or beam) selection. The operation of the RAN node 2 described with reference to Fig. 4 configures RSRP thresholds for SSB (or beam) selection on a per-feature or per-feature combination basis. Thus, the operation of the RAN node 2 described with reference to Fig. 4 can assist the UE 1 in performing SSB (or beam) selection considering features or feature combinations.

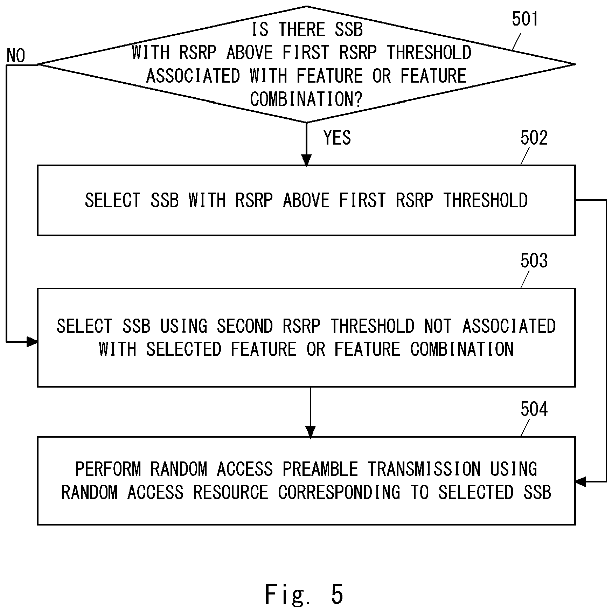

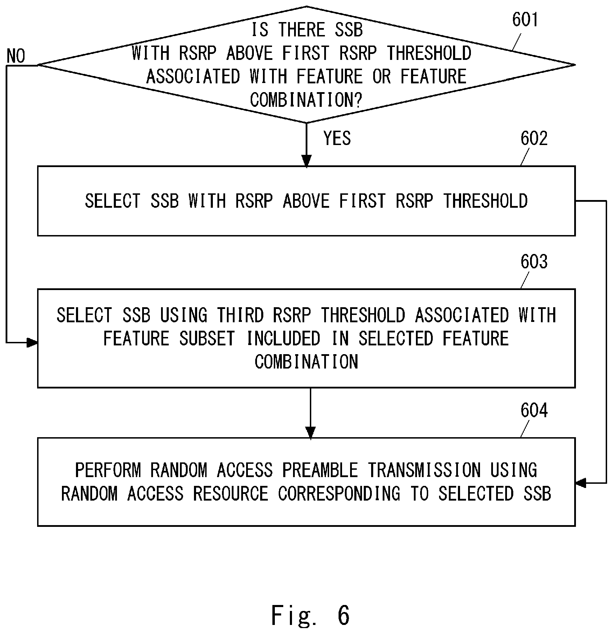

Several modifications of the operation shown in Fig. 3 are described below. Figs. 5 and 6 provide a fallback for the case where no SSB (or beam) has an RSRP above an RSRP threshold associated with a selected feature or feature combination. The RSRP measured with respect to the SSB may be a Synchronization Signal RSRP (SS-RSRP).

Steps 501 and 502 in Fig. 5 correspond to step 301 in Fig. 3. In step 501, the UE 1 (MAC layer 206) determines whether there is at least one SSB with an RSRP that exceeds a first RSRP threshold associated with a selected, desired, or intended feature or feature combination. In other words, the UE 1 determines whether or not at least one SSB with an RSRP greater than the first RSRP threshold associated with the feature or feature combination is available. If there is at least one SSB with an RSRP above the first RSRP threshold (YES in step 501), the UE 1 selects an SSB with an RSRP above the first RSRP threshold (step 502). The selected, desired, or intended feature or feature combination may be passed from the RRC layer 203 to the MAC layer 206.

Conversely, if no SSB has an RSRP above the first RSRP threshold (NO in step 502), the UE 1 attempts to select an SSB using a second RSRP threshold that is not associated with the selected feature or feature combination (step 503). For example, the UE 1 may perform the same random access resource selection as in the 3GPP Release 15 and/or Release 16 random access procedures. In other words, the second threshold may be the same as the RSRP threshold (i.e., rsrp-ThresholdSSB or msgA-RSRP-ThresholdSSB) used in the 3GPP Release 15 and/or Release 16 random access procedures. The UE 1 may determine whether at least one SSB with an RSRP exceeding the second RSRP threshold is available. If there is at least one SSB with an RSRP greater than the second RSRP threshold, the UE 1 may select an SSB with an RSRP greater than the second RSRP threshold. If there is no SSB with an RSRP above the second RSRP threshold, the UE 1 may select any SSB.

In step 504, the UE 1 performs a RACH preamble transmission using a RACH resource corresponding to the selected SSB. Specifically, the MAC layer 206 of the UE 1 selects a RACH resource for the preamble transmission from RACH resources in a RACH resource partition. This RACH resource partition is the RACH resource partition associated with the selected SSB and associated with the selected feature or feature combination. The MAC layer 206 of the UE 1 requests the PHY layer 207 to transmit a RACH preamble on the selected RACH resource.

Fig. 6 shows a fallback that is different from the one shown in Fig. 5. Steps 601 and 602 in Fig. 6 correspond to step 301 in Fig. 3. In step 601, the UE 1 (MAC layer 206) determines whether there is at least one SSB with an RSRP that exceeds a first RSRP threshold associated with a selected, desired, or intended feature combination. In other words, the UE 1 determines whether or not at least one SSB with an RSRP greater than the first RSRP threshold associated with the feature combination is available. If there is at least one SSB with an RSRP above the first RSRP threshold (YES in step 601), the UE 1 selects an SSB with an RSRP above the first RSRP threshold (step 602). The selected, desired, or intended feature combination may be passed from the RRC layer 203 to the MAC layer 206.

Conversely, if no SSB has an RSRP above the first RSRP threshold (NO in step 602), the UE 1 attempts to select an SSB using a third RSRP threshold associated with a feature subset included in the selected feature combination (step 603). The feature subset may be referred to as a subset of features, a feature subcombination, or a subcombination of features. The feature subset includes one or more features. For example, if the selected feature combination is RedCap+Slicing, the feature subset may be RedCap. If the selected feature combination is RedCap+CovEnh+Slicing, the feature subset may be RedCap+CovEnh, RedCap, or CovEnh. The UE 1 may select a feature subset that should be prioritized, or it may select a feature subset that is more necessary (or important). For example, if the feature combination includes RedCap and one or more other features, the UE 1 may ensure that RedCap is included in the feature subset.

In step 603, the UE 1 may determine whether at least one SSB with an RSRP greater than the third RSRP threshold is available. If there is at least one SSB with an RSRP greater than the third RSRP threshold, the UE 1 may select the SSB with an RSRP greater than the third RSRP threshold. If there is no SSB with an RSRP greater than the third RSRP threshold, the UE 1 may select any SSB.

In step 604, the UE 1 performs a RACH preamble transmission using a RACH resource corresponding to the selected SSB. Specifically, the MAC layer 206 of the UE 1 selects a RACH resource for the preamble transmission from RACH resources in a RACH resource partition. This RACH resource partition is the RACH resource partition associated with the selected SSB and associated with the selected feature or feature combination. The MAC layer 206 of the UE 1 requests the PHY layer 207 to transmit a RACH preamble on the selected RACH resource.

### Second Example Embodiment

The example configuration of a radio communication system in this example embodiment may be similar to the example shown in Fig. 1. The control plane protocol stack of the UE 1 may be similar to the example shown in Fig. 2.

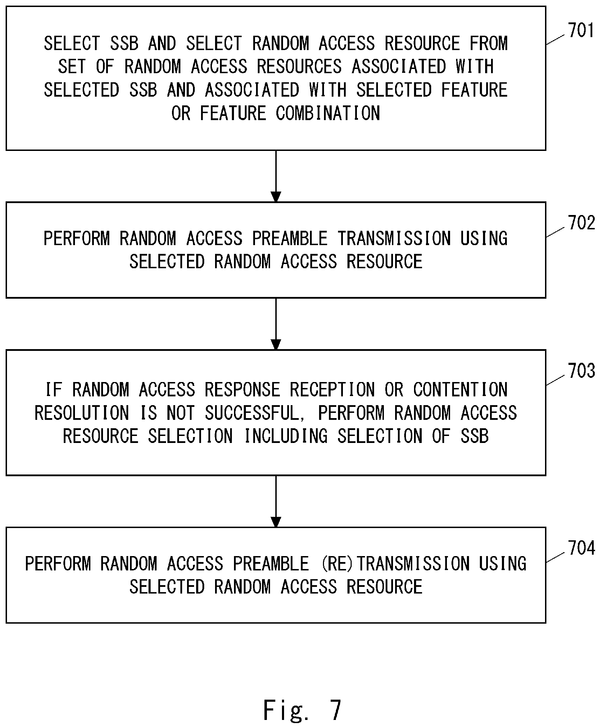

Fig. 7 shows an example of the operation of the UE 1 in a random access procedure. In step 701, the UE 1 performs a random access resource selection considering a feature or feature combination selected, desired, or intended by the UE 1. The random access resource selection includes an SSB (or beam) selection. In the random access resource selection, the MAC layer 206 of the UE 1 first selects an SSB.

As an example, not a limitation, the UE 1 may select an SSB as in step 301 of Fig. 3. The MAC layer 206 of the UE 1 may select an SSB having an RSRP greater than an RSRP threshold associated with a feature or feature combination selected, desired, or intended by the UE 1. The selected, desired, or intended feature or feature combination may be passed from the RRC layer 203 to the MAC layer 206. Alternatively, the MAC layer 206 of the UE 1 may perform the random access resource selection in the same manner as in the 3GPP Release 15 and/or Release 16 random access procedures. In other words, the RSRP threshold for the SSB selection may be the same as the RSRP threshold (i.e., rsrp-ThresholdSSB or msgA-RSRP-ThresholdSSB) used in the 3GPP Release 15 and/or Release 16 random access procedures. After selecting the SSB, the MAC layer 206 of the UE 1 selects a random access resource from a set of random access resources associated with the selected SSB and associated with the selected feature or feature combination. The set of random access resources (or RACH resources) includes RACH preambles or combinations of RACH occasions and RACH preambles.

In step 702, the MAC layer 206 of the UE 1 performs a random access preamble transmission using the selected random access resource. The MAC layer 206 of the UE 1 requests the PHY layer 207 to transmit a preamble on the selected random access resource.

In step 703, if the Random Access Response (RAR) reception or the contention resolution is not successful, the UE 1 performs a random access resource selection including the selection of an SSB. The UE 1 may perform a random access resource selection similar to step 701. That is, the UE 1 retries to select an SSB having an RSRP greater than an RSRP threshold. The selected SSB can be different from the SSB selected in step 701 for the last RACH preamble transmission. For example, as a result of the UE 1 moving, the current SSB with the best RSRP may be different from the SSB selected in step 701 in the past. After (re)selecting the SSB, the MAC layer 206 of the UE 1 selects a random access resource from the set of random access resources associated with the (re)selected SSB and associated with the selected feature or feature combination.

In step 704, the UE 1 performs a random access preamble (re)transmission using the (re)selected random access resource. The MAC layer 206 of the UE 1 requests the PHY layer 207 to transmit a preamble on the (re)selected random access resource.

The operation of the UE 1 described with reference to Fig. 7 enables the UE 1 to perform a random access resource selection involving the selection of an SSB before retransmitting a random access preamble. The agreement on page 20 of Non-Patent Literature 4 states that "[a]s a general rule, all RACH retransmissions shall be performed over the same RACH resources (and same carrier - NUL/SUL) as the one selected for initial RACH resource". This agreement could be questionable from several points of view. For example, according to this agreement, the UE 1 cannot change the previously selected beam, even if its best beam (i.e., the beam with the highest SS-RSRP) changes. This is because to indicate a change in the selected beam (or SSB) to the network, the UE 1 must change the random access preamble. The operation of the UE 1 described with reference to Fig. 7 can help to overcome this problem.

### Third Example Embodiment

The example configuration of a radio communication system in this example embodiment may be similar to the example shown in Fig. 1. The control plane protocol stack of the UE 1 may be similar to the example shown in Fig. 2.

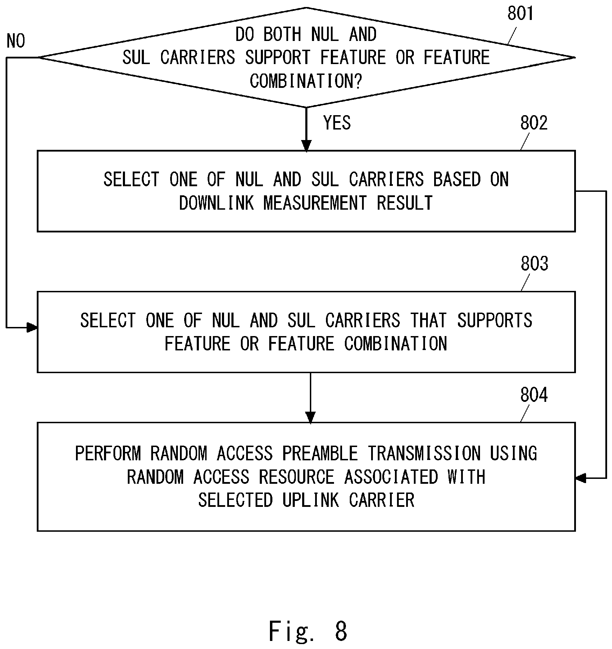

Fig. 8 shows an example of the operation of the UE 1 in a random access procedure. In step 801, the UE 1 (MAC layer 206) selects an uplink carrier. In other words, the UE 1 (MAC layer 206) selects between a Normal Uplink (NUL) carrier and a Supplementary Uplink (SUL) carrier before selecting a random access resource. An SUL carrier can be configured as a complement to an NUL carrier. To supplement the coverage of an NUL carrier, an SUL carrier typically uses a lower uplink frequency than the NUL carrier.

Specifically, in step 801, the MAC layer 206 of the UE 1 determines if both the NUL and SUL carriers support a feature or feature combination selected, desired, or intended by the UE 1. In other words, the MAC layer 206 of the UE 1 determines whether or not the selected, desired, or intended feature or feature combination is executable (or can be executed) on both the NUL and SUL carriers. The selected, desired, or intended feature or feature combination may be passed from the RRC layer 203 to the MAC layer 206.

If the result of step 801 is YES, the UE 1 (MAC layer 206) selects one of the NUL carrier and the SUL carrier based on a downlink measurement result (step 802). For example, the UE 1 may operate similarly to the selection between NUL and SUL carriers in 3GPP Release 15 and/or Release 16. If the RSRP of the downlink pathloss reference is lower than an RSRP threshold for uplink carrier selection (e.g., rsrp-ThresholdSSB-SUL), the UE 1 may select the SUL carrier to perform the random access procedure. Otherwise, the UE 1 may select the NUL carrier to perform the random access procedure.

If the result of step 801 is NO, the UE 1 (MAC layer 206) selects one of the NUL carrier and the SUL carrier that supports the selected, desired, or intended feature or feature combination (step 803).

In step 804, the UE 1 performs a random access preamble transmission using a random access resource associated with the selected uplink carrier (NUL or SUL). Specifically, the MAC layer 206 of the UE 1 selects a RACH resource to be used for the RACH preamble transmission from a set of random access resources (RACH resources) associated with the selected uplink carrier and associated with the selected feature or feature combination. The set of RACH resources includes RACH preambles, or combinations of RACH occasions and RACH preambles. A RACH occasion is time and frequency resources for a RACH preamble transmission. The MAC layer 206 of the UE 1 requests the PHY layer 207 to transmit a random access preamble (RACH preamble) on the selected RACH resource.

According to the operation of the UE 1 described with reference to Fig. 8, when selecting between the NUL and SUL carriers, the UE 1 considers whether the selected feature or feature combination is executable (or supported) on the NUL carrier and/or the SUL carrier. Accordingly, the operation of the UE 1 described with reference to Fig. 8 enables the UE 1 to coordinate the random access resource selection based on Release 17 features or feature combinations with the selection between the NUL and SUL carriers. This also allows the network to not necessarily support the same feature or feature combination on both the NUL and SUL carriers. In other words, the network does not necessarily need to configure the same feature or feature combination on both the NUL and SUL carriers.

As an example, consider the case where the feature combination includes RedCap and SDT. In this case, the UE 1 selects an uplink carrier that supports both RedCap and SDT (step 801). If both the NUL and SUL carriers support both RedCap and SDT, the UE 1 selects one of the NUL and SUL carriers based on downlink measurement results (step 802). On the other hand, if only one of the NUL and SUL carriers (e.g., the NUL carrier) supports both RedCap and SDT, the UE 1 selects that one uplink carrier (e.g., the NUL carrier) (step 803). RedCap UEs may not support carrier aggregation (CA), and it is assumed that there are cases where RACH resources need to be allocated to RedCap UEs only on the NUL carrier. The procedure or operation shown in Figure 8 is advantageous in this case. In particular, if the uplink carrier selection is performed based on downlink measurement results without consideration of features or feature combinations, a RedCap UE may select the SUL carrier and consequently fail to transmit a RACH preamble in the current cell. The procedure or operation shown in Fig. 8 helps to solve this problem. Regardless of whether the feature combination includes RedCap or not, the procedure or operation of Fig. 8 can be applied similarly to the case of any combination of two or more features.

### Fourth Example Embodiment

The example configuration of a radio communication system in this example embodiment may be similar to the example shown in Fig. 1. The control plane protocol stack of the UE 1 may be similar to the example shown in Fig. 2.

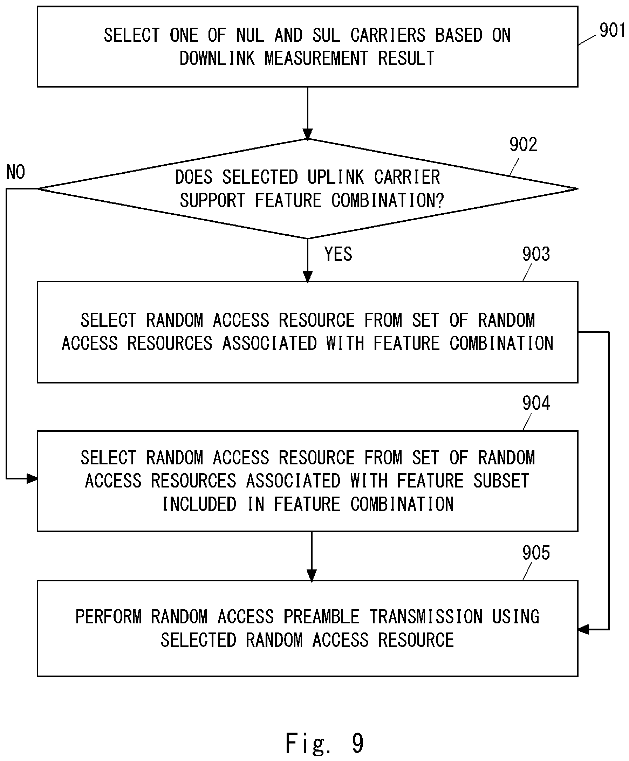

Fig. 9 shows an example of the operation of the UE 1. In step 901, the UE 1 (MAC layer 206) selects one of a NUL carrier and a SUL carrier based on a downlink measurement result (step 802). For example, the UE 1 may operate similarly to the selection between NUL and SUL carriers in 3GPP Release 15 and/or Release 16. If the RSRP of the downlink pathloss reference is lower than an RSRP threshold for uplink carrier selection (e.g., rsrp-Threshold S SB -SUL), the UE 1 may select the SUL carrier to perform the random access procedure. Otherwise, the UE 1 may select the NUL carrier to perform the random access procedure.

In step 902, the UE 1 (MAC layer 206) determines whether the uplink carrier selected in step 801 supports a feature combination selected, desired, or intended by the UE 1. In other words, the MAC layer 206 of the UE 1 determines whether the selected, desired, or intended feature combination is executable (or can be executed) on the uplink carrier selected in step 801 based on downlink measurements. The selected, desired, or intended feature combination may be passed from the RRC layer 203 to the MAC layer 206.

If the result of step 902 is YES, the UE 1 selects a random access resource from a set of random access resources associated with the selected feature or feature combination (step 903). Specifically, the MAC layer 206 of the UE 1 selects a RACH resource to be used for the RACH preamble transmission from a set of random access resources (RACH resources) associated with the selected uplink carrier and associated with the selected feature or feature combination. The set of RACH resources includes RACH preambles, or combinations of RACH occasions and RACH preambles. A RACH occasion is time and frequency resources for a RACH preamble transmission.

Conversely, if the result of step 902 is NO, the UE 1 selects a random access resource from a set of random access resources associated with a feature subset included in the selected feature combination (step 904). The feature subset includes one or more features. For example, if the selected feature combination is RedCap+Slicing, the feature subset may be RedCap. If the selected feature combination is RedCap+CovEnh+Slicing, the feature subset may be RedCap+CovEnh, RedCap, or CovEnh. The feature subset may be one or more features that are supported (or executable) on the uplink carrier selected in step 801. The UE 1 may select a feature subset that should be prioritized, or it may select a feature subset that is more necessary (or important). For example, if the feature combination includes RedCap and one or more other features, the UE 1 may ensure that RedCap is included in the feature subset.

In step 905, the MAC layer 206 of the UE 1 performs a random access preamble transmission using the selected random access resource. Specifically, the MAC layer 206 of the UE 1 requests the PHY layer 207 to transmit a random access preamble (RACH preamble) on the selected RACH resource.

When performing the fallback operations of steps 904 and 905, the AS layer 208 of the UE 1 may notify the NAS layer 202 of a random access failure corresponding to the originally intended feature combination or of a fallback to a feature subset. Additionally or alternatively, if no feature subset is also available in step 904, the AS layer 208 may notify the NAS layer 202 of a random access failure corresponding to the originally intended feature or feature combination. In this case, the AS layer 208 may notify the NAS layer 202 of a failure of the (most) prioritized feature in the feature combination. Alternatively, the AS layer 208 may notify the NAS layer 202 of a failure with respect to a feature for which the AS layer 208 is not permitted to determine whether the feature (or its functionality) needs to be executed or whether it can be executed.

According to the operation of the UE 1 described with reference to Fig. 9, the UE 1 first selects between the NUL and SUL carriers based on downlink measurements. Subsequently, if the feature combination is not supported (or not executable) on the selected uplink carrier, the UE 1 selects a random access resource associated with a feature subset included in that feature combination. Accordingly, the operation of the UE 1 described with reference to Fig. 9 enables the UE 1 to coordinate the random access resource selection based on Release 17 feature combinations with the selection between the NUL and SUL carriers. This also allows the network to not necessarily support the same feature or feature combination on both the NUL and SUL carriers. In other words, the network does not necessarily need to configure the same feature or feature combination on both the NUL and SUL carriers.

### Fifth Example Embodiment

The example configuration of a radio communication system in this example embodiment may be similar to the example shown in Fig. 1. The control plane protocol stack of the UE 1 may be similar to the example shown in Fig. 2.

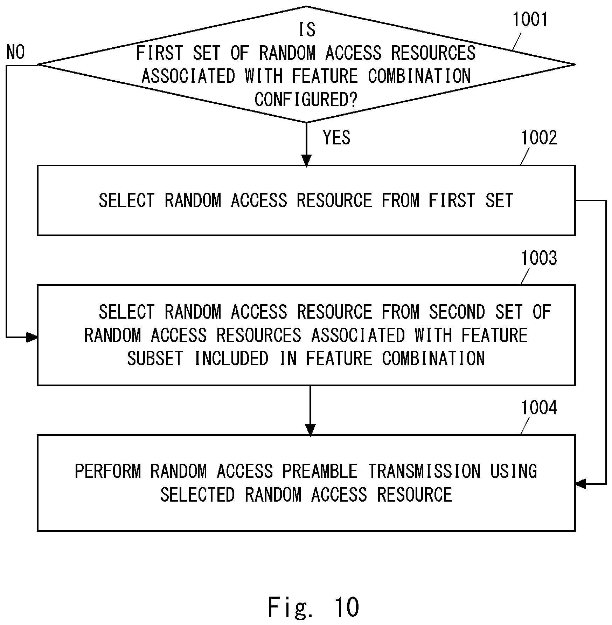

Fig. 10 shows an example of the operation of the UE 1 in a random access procedure. Steps 1001-1003 relate to random access resource selection. In step 1001, the UE 1 (MAC layer 206) determines whether or not a first set of random access resources associated with a feature combination selected, desired, or intended by the UE 1 is configured (or available). The RRC layer 203 may configure the MAC layer 206 with multiple resource sets (or resource partitions), including the first set. The RRC layer 203 receives a random access configuration via broadcast from the RAN node 2, and configures the MAC layer 206 with the multiple resource sets (or resource partitions) indicated in the random access configuration. Accordingly, if the result of step 1001 is YES, it means that the RAN node 2 provides in the cell 21 the random access resource set (or resource partition) associated with the feature combination selected, desired, or intended by the UE 1. In other words, YES in step 1001 means that the feature combination selected, desired, or intended by the UE 1 is supported (or available) in the cell 21. Conversely, if the result of step 1001 is NO, it means that the RAN node 2 does not provide in the cell 21 the random access resource set (or resource partition) associated with the feature combination selected, desired, or intended by the UE 1. In other words, NO in step 1001 means that the feature combination selected, desired, or intended by UE 1 is not supported (or available) in the cell 21.

If the result of step 1001 is YES, then the UE 1 (MAC layer 206) selects a random access resource from the first set (step 1002).

If the result of step 1001 is NO, then the UE 1 (MAC layer 206) selects a random access resource from a second set of random access resources associated with a feature subset included in the selected feature combination (step 1003). The feature subset includes one or more features. For example, if the selected feature combination is RedCap+Slicing, the feature subset can be RedCap. If the selected feature combination is RedCap+CovEnh+Slicing, the feature subset can be RedCap+CovEnh, RedCap, or CovEnh. The feature subset may be one or more features supported (or executable) in the cell 21. The UE 1 may select a feature subset that should be prioritized, or it may select a feature subset that is more necessary (or important). For example, if the feature combination includes RedCap and one or more other features, the UE 1 may ensure that RedCap is included in the feature subset.

In step 1004, the MAC layer 206 of the UE 1 performs random access preamble transmission using the selected random access resource. Specifically, the MAC layer 206 of the UE 1 requests the PHY layer 207 to transmit a random access preamble (RACH preamble) on the selected RACH resource.

When performing the fallback operations of steps 1003 and 1004, the AS layer 208 of the UE 1 may notify the NAS layer 202 of a random access failure corresponding to the originally intended feature combination or of a fallback to a feature subset. Additionally or alternatively, if no feature subset is also available in step 1003, the AS layer 208 may notify the NAS layer 202 of a random access failure corresponding to the originally intended feature or feature combination. In this case, the AS layer 208 may notify the NAS layer 202 of a failure of the (most) prioritized feature in the feature combination. Alternatively, the AS layer 208 may notify the NAS layer 202 of a failure with respect to a feature for which the AS layer 208 is not permitted to determine whether the feature (or its functionality) needs to be executed or whether it can be executed.

According to the operation of the UE 1 described with reference to Fig. 10, if the cell 21 does not provide a RACH resource set associated with a feature combination selected, desired, or intended by the UE 1, the UE 1 selects a RACH resource for random access to the cell 21 from an alternative RACH resource set that is associated with a feature subset included in that feature combination and is provided by the cell 21. This operation of the UE 1 allows the cell 21 or the RAN node 2 to provide only multiple RACH resource sets for only a portion of all possible feature combinations. Accordingly, the cell 21 does not necessarily have to provide all RACH resource sets for all possible feature combinations. This can help reduce fragmentation of random access resources.

### Sixth Example Embodiment

The example configuration of a radio communication system in this example embodiment may be similar to the example shown in Fig. 1. The control plane protocol stack of the UE 1 may be similar to the example shown in Fig. 2.

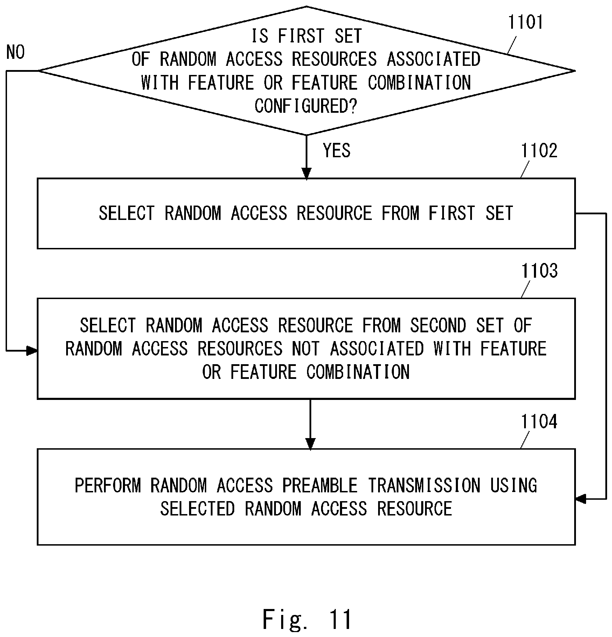

Fig. 11 shows an example of the operation of the UE 1 in a random access procedure. Steps 1101-1103 relate to random access resource selection. In step 1101, the UE 1 (MAC layer 206) determines whether or not a first set of random access resources associated with a feature or feature combination selected, desired, or intended by the UE 1 is configured (or available). The RRC layer 203 may configure the MAC layer 206 with multiple resource sets (or resource partitions), including the first set. The RRC layer 203 receives a random access configuration via broadcast from the RAN node 2, and configures the MAC layer 206 with the multiple resource sets (or resource partitions) indicated in the random access configuration. Accordingly, if the result of step 1101 is YES, it means that the RAN node 2 provides in the cell 21 the random access resource set (or resource partition) associated with the feature or feature combination selected, desired, or intended by the UE 1. In other words, YES in step 1101 means that the feature or feature combination selected, desired, or intended by the UE 1 is supported (or available) in the cell 21. Conversely, if the result of step 1101 is NO, it means that the RAN node 2 does not provide in the cell 21 the random access resource set (or resource partition) associated with the feature or feature combination selected, desired, or intended by the UE 1. In other words, NO in step 1101 means that the feature or feature combination selected, desired, or intended by UE 1 is not supported (or available) in the cell 21.

If the result of step 1101 is YES, then the UE 1 (MAC layer 206) selects a random access resource from the first set (step 1102).

If the result of step 1101 is NO, then the UE 1 (MAC layer 206) selects a random access resource from a second set of random access resources not associated with the selected feature or feature combination (step 1103). For example, the UE 1 may perform the random access resource selection in the same manner as the 3GPP Release 15 and/or Release 16 random access procedure.

In step 1104, the MAC layer 206 of the UE 1 performs random access preamble transmission using the selected random access resource. Specifically, the MAC layer 206 of the UE 1 requests the PHY layer 207 to transmit a random access preamble (RACH preamble) on the selected RACH resource.

When performing the fallback operations of steps 1103 and 1104, the AS layer 208 of the UE 1 may notify the NAS layer 202 of a random access failure corresponding to the originally intended feature combination or of a fallback to a random access not considering the feature combination.

According to the operation of the UE 1 described with reference to Fig. 11, if the cell 21 does not provide a RACH resource set associated with a feature combination selected, desired, or intended by the UE 1, the UE 1 selects a RACH resource for random access to the cell 21 from an alternative RACH resource set that is not associated with that feature combination. This operation of the UE 1 allows the cell 21 or the RAN node 2 to provide only multiple RACH resource sets for only a portion of all possible features and feature combinations. Accordingly, the cell 21 does not necessarily have to provide all RACH resource sets for all possible features and feature combinations. This can help reduce fragmentation of random access resources.

### Seventh Example Embodiment

The example configuration of a radio communication system in this example embodiment may be similar to the example shown in Fig. 1. The control plane protocol stack of the UE 1 may be similar to the example shown in Fig. 2.

This example embodiment relates to the handling of features and feature combinations selected, desired, or intended by the UE 1. The features can be divided into at least two types. In the first type, the MAC layer 206 of the UE 1 determines whether or not the feature needs to be executed (or whether or not the feature can be executed) based on information or conditions that it possesses. Additionally or alternatively, the MAC layer 206 may make the above determination based on information received from or specified by the upper layers (e.g., RRC layer 203) of the UE 1. For this type, if the MAC layer 206 of the UE 1 determines that at least one feature of the selected, desired, or intended feature combination does not need to be (or cannot be) performed, the MAC layer 206 may change the content of the feature combination (i.e., the included features) and select a RACH resource for the remaining features or feature combinations except for that feature. In other words, the MAC layer 206 may select a feature subset that excludes a feature that does not need to be (or cannot be) performed. In this case, the MAC layer 206 may communicate the decision results (e.g., information regarding the feature combination subject to be performed, information regarding the feature(s) to be excluded) to the RRC layer 203.

The second type is one in which the MAC layer 206 of the UE 1 does not or should not determine whether or not the feature needs to be executed (or whether or not the feature can be executed). In this type, the RRC layer 203 of the UE 1 determines whether or not the feature needs to be performed (or whether or not the feature can be performed) and informs the MAC layer 206 of the necessary information. The determination by the RRC layer 203 may be based on one or both of the capability of the UE 1 (UE capability) and predetermined information possessed by the RRC layer 203. Additionally or alternatively, the RRC layer 203 may make the above determination based on information received from or specified by a further higher layer (e.g., the NAS layer 202) of the UE 1. The MAC layer 206 selects a RACH resource corresponding to that feature or a feature combination including that feature. If the MAC layer 206 determines that there is no RACH resource corresponding to that feature, it may report a failure indication to the RRC layer 203 regarding the RACH resource selection. On the other hand, if the MAC layer 206 determines that there is no RACH resource corresponding to a feature combination including that second type of feature, the MAC layer 206 may exclude any one or more features of the first type from the feature combination and select a RACH resource corresponding to a feature subset including that second type of feature and the remainder of the features of the first type. Alternatively, the MAC layer 206 may select a RACH resource corresponding to only the second type of feature. In other words, when a feature subset needs to be selected from the feature combination, the MAC layer 206 may ensure that the feature subset includes one or more second type features (e.g., RedCap) that are included in the feature combination. The MAC layer 206 may then adjust the number of features in the feature subset depending on whether or not the first type features included in the feature combination are to be included in the feature subset.

The feature combination selected, desired, or intended by the UE 1 may include only one of the above two types or both of the two types. If the feature combination includes both of the two types, the MAC layer 206 may preferentially consider the second type of features. For example, the MAC layer 206 may preferentially perform the second type of features. The MAC layer 206 may preferentially select a RACH resource corresponding to the second type of features.

### Eighth Example Embodiment

The example configuration of a radio communication system in this example embodiment may be similar to the example shown in Fig. 1. The control plane protocol stack of the UE 1 may be similar to the example shown in Fig. 2.

The RAN node 2 broadcasts a random access configuration (e.g., RACH-ConfigCommon) in the cell 21. The random access configuration provides partitions of random access resources to the UE 1, along with other configurations. In other words, the random access configuration indicates a random access resource configuration that specifies partitions of random access resources. According to the received random access resource configuration, the UE 1 selects a random access resource partition corresponding to a selected, desired, or intended feature or feature combination, and selects a random access resource from the selected partition.

The RAN node 2 may generate the random access resource configuration as follows. The random access resource partitioning for a single feature differs from the random access resource partitioning for a combination of multiple features including that feature in terms of the granularity (or resolution) of the distinction or identification of that feature. This helps to reduce the growth in the number of random access resource partitions for feature combinations. In other words, this can help reduce fragmentation of random access resources.

In an example, the random access resource partitioning for the Slicing feature may provide three or more resource partitions to ensure that three or more network slice groups can be distinguished. This allows the slicing indication based on the random access resource selection by the UE 1 to provide the RAN node 2 with a distinction between network slice groups of two or less.

In contrast, the random access resource partitioning for a feature combination (e.g., SDT+Slicing, RedCap+Slicing) that includes the Slicing feature may provide a distinction between two or fewer network slice groups. Thus, with respect to the Slicing feature, this resource partitioning can provide no more than two resource partitions to ensure that no more than two network slice groups can be distinguished.

Alternatively, the random access resource partitioning for a feature combination that includes the Slicing feature may provide only a two-dimensional (or binary) distinction between prioritized and non-prioritized network slices. Thus, with respect to the Slicing feature, this resource partitioning can provide only one resource partition to distinguish prioritized network slices.

In another example, the random access resource partitioning for the CovEnh feature may provide three or more resource partitions to ensure that three or more CE levels can be distinguished.

In contrast, the random access resource partitioning for a feature combination (e.g., SDT+CovEnh, RedCap+CovEnh) that includes the CovEnh feature may provide a distinction between two or more CE-level groups. Thus, with respect to the CovEnh feature, this resource partitioning may provide two or more resource partitions to ensure that two or more CE-level groups can be distinguished.

Alternatively, the random access resource partitioning for a feature combination that includes the CovEnh feature may provide only a two-dimensional (or binary) distinction as to whether or not an Msg3 PUSCH repetition is required. Thus, with respect to the CovEnh feature, this resource partitioning may provide only one resource partition to be used when an Msg3 PUSCH repetition is required.

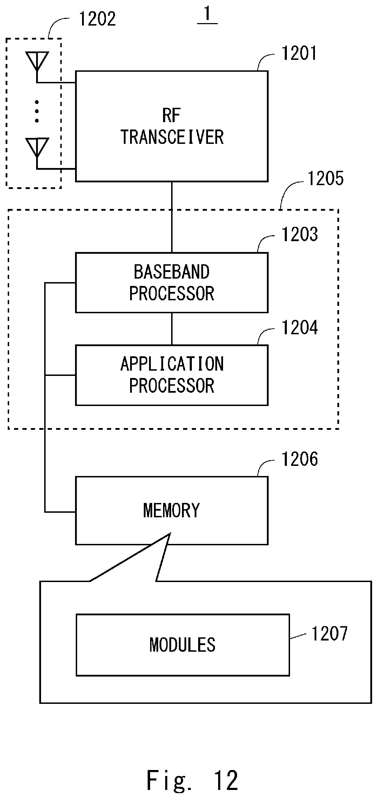

The following provides configuration examples of the UE 1 and the RAN node 2 according to the above described example embodiments. Fig. 12 is a block diagram showing an example configuration of the UE 1. The radio frequency (RF) transceiver 1201 performs analog RF signal processing to communicate with a RAN node. The RF transceiver 1201 may include a plurality of transceivers. The analog RF signal processing performed by the RF transceiver 1201 includes frequency up-conversion, frequency down-conversion, and amplification. The RF transceiver 1201 is coupled to the antenna array 1202 and the baseband processor 1203. The RF transceiver 1201 receives modulation symbol data (or OFDM symbol data) from the baseband processor 1203, generates a transmission RF signal, and supplies the transmission RF signal to the antenna array 1202. The RF transceiver 1201 generates a baseband reception signal based on the reception RF signal received by the antenna array 1202 and supplies the baseband reception signal to the baseband processor 1203. The RF transceiver 1201 may include an analog beamformer circuit for beamforming. The analog beamformer circuit includes, for example, a plurality of phase shifters and a plurality of power amplifiers.

The baseband processor 1203 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). On the other hand, the control-plane processing includes communication management of layer 1 (e.g., transmission power control), layer 2 (e.g., radio resource management, and hybrid automatic repeat request (HARQ) processing), and layer 3 (e.g., signaling regarding attachment, mobility, and call management).

For example, the digital baseband signal processing performed by the baseband processor 1203 may include signal processing in the Service Data Adaptation Protocol (SDAP) layer, Packet Data Convergence Protocol (PDCP) layer, Radio Link Control (RLC) layer, Medium Access Control (MAC) layer, and Physical (PHY) layer. The control-plane processing performed by the baseband processor 1203 may also include processing of Non-Access Stratum (NAS) protocols, Radio Resource Control (RRC) protocols, MAC Control Elements (CEs), and Downlink Control Information (DCIs).

The baseband processor 1203 may perform Multiple Input Multiple Output (MIMO) encoding and precoding for beamforming.

The baseband processor 1203 may include a modem processor (e.g., Digital Signal Processor (DSP)) that performs the digital baseband signal processing and a protocol stack processor (e.g., Central Processing Unit (CPU) or Micro Processing Unit (MPU)) that performs the control-plane processing. In this case, the protocol stack processor performing the control-plane processing may be integrated with an application processor 1204 described later.

The application processor 1204 may also be referred to as a CPU, an MPU, a microprocessor, or a processor core. The application processor 1204 may include a plurality of processors (processor cores). The application processor 1204 loads a system software program (Operating System (OS)) and various application programs (e.g., a voice call application, a web browser, a mailer, a camera operation application, a music player application) from a memory 1206 or from another memory (not shown) and executes these programs, thereby providing various functions of the UE 1.

In some implementations, as represented by the dashed line (1205) in Fig. 12, the baseband processor 1203 and the application processor 1204 may be integrated on a single chip. In other words, the baseband processor 1203 and the application processor 1204 may be implemented in a single System on Chip (SoC) device 1205. A SoC device may be referred to as a system Large Scale Integration (LSI) or a chipset.

The memory 1206 is a volatile memory or a non-volatile memory, or a combination thereof. The memory 1206 may include a plurality of physically independent memory devices. The volatile memory is, for example, Static Random Access Memory (SRAM), Dynamic RAM (DRAM), or a combination thereof. The non-volatile memory may be a Mask Read Only Memory (MROM), an Electrically Erasable Programmable ROM (EEPROM), a flash memory, a hard disk drive, or any combination thereof. The memory 1206 may include, for example, an external memory device that can be accessed by the baseband processor 1203, the application processor 1204, or the SoC 1205. The memory 1206 may include an internal memory device that is integrated into the baseband processor 1203, the application processor 1204, or the SoC 1205. Further, the memory 1206 may include a memory in a Universal Integrated Circuit Card (UICC).

The memory 1206 may store one or more software modules (computer programs) 1207 including instructions and data for processing by the UE 1 described in the above example embodiments. In some implementations, the baseband processor 1203 or the application processor 1204 may load the software module(s) 1207 from the memory 1206 and execute the loaded software module(s) 1207, thereby performing the processing of the UE 1 described in the above example embodiments with reference to the drawings.

The control-plane processing and operations performed by the UE 1 described in the above embodiments can be achieved by elements other than the RF transceiver 1201 and the antenna array 1202, i.e., achieved by the memory 1206, which stores the software modules 1207, and one or both of the baseband processor 1203 and the application processor 1204.

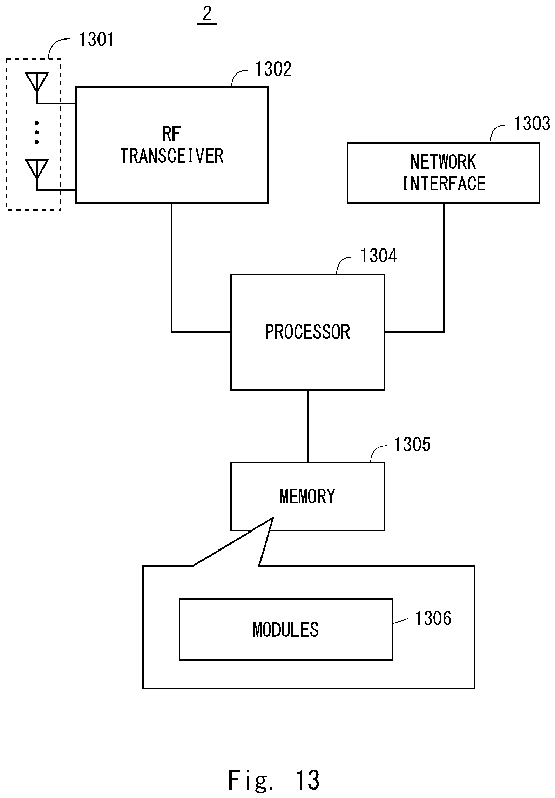

Fig. 13 is a block diagram showing an example configuration of the RAN node 2 according to the above example embodiments. Referring to Fig. 13, the RAN node 2 includes a Radio Frequency transceiver 1301, a network interface 1303, a processor 1304, and a memory 1305. The RF transceiver 1301 performs analog RF signal processing to communicate with UEs including the UE 1. The RF transceiver 1301 may include a plurality of transceivers. The RF transceiver 1301 is coupled to an antenna array 1302 and the processor 1304. The RF transceiver 1301 receives modulated symbol data from the processor 1304, generates a transmission RF signal, and supplies the transmission RF signal to the antenna array 1302. Further, the RF transceiver 1301 generates a baseband reception signal based on a reception RF signal received by the antenna array 1302 and supplies the baseband reception signal to the processor 1304. The RF transceiver 1301 may include an analog beamformer circuit for beam forming. The analog beamformer circuit includes, for example, a plurality of phase shifters and a plurality of power amplifiers.

The network interface 1303 is used to communicate with network nodes (e.g., SN 2, and control and transfer nodes in the core network). The network interface 1303 may include, for example, a network interface card (NIC) conforming to the IEEE 802.3 series.

The processor 1304 performs digital baseband signal processing (i.e., data-plane processing) and control-plane processing for radio communication. The processor 1304 may include a plurality of processors. The processor 1304 may include, for example, a modem processor (e.g., Digital Signal Processor (DSP)) that performs digital baseband signal processing and a protocol stack processor (e.g., Central Processing Unit (CPU) or Micro Processing Unit (MPU) that performs the control-plane processing. The processor 1304 may include a digital beamformer module for beam forming. The digital beamformer module may include a Multiple Input Multiple Output (MIMO) encoder and a precoder.

The memory 1305 is composed of a combination of a volatile memory and a non-volatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disk drive, or any combination thereof. The memory 1305 may include a storage located that is separate from the processor 1304. In this case, the processor 1304 may access the memory 1305 through the network interface 1303 or an I/O interface not shown.

The memory 1305 may store one or more software modules (computer programs) 1306 including instructions and data for performing the processing of the RAN node 2 described in the above example embodiments. In some implementations, the processor 1304 may be configured to load these software modules 1306 from the memory 1305 and execute the loaded software modules, thereby performing the processing of the RAN node 2 described in the above example embodiments.

If the RAN node 2 is a CU (e.g., gNB-CU) or CU-CP (e.g., gNB-CU-CP), the RAN node 2 does not need to include the RF transceiver 1301 (and antenna array 1302).

As described using Figs. 12 and 13, each of the processors in the UE 1 and RAN node 2 according to the example embodiments described above can execute one or more programs, containing a set of instructions, for causing a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, but not limitation, transitory computer readable media or communication media can include electrical, optical, acoustical, or other form of propagated signals.

### Other Example Embodiments

The "features" in the example embodiments described above may be new features to be introduced in future 3GPP Release 18 or later. Similarly, the "feature combinations" in the example embodiments described above may include new features to be introduced in future 3GPP Release 18 or later. For example, in addition to Mobile Originated (MO) SDT to be introduced in Release 17, Mobile Terminated (MT) SDT will also be introduced in 3GPP Release 18. In an implementation, the MT-SDT feature may be distinguished from the MO-SDT feature, and a separate RACH resource set (or partition, or pool) may be configured for the MT-SDT feature. In this case, a feature combination may include MT-SDT. The RAN node 2 may inform the UE 1 via broadcast (e.g., SIB) or dedicated RRC signaling whether or not MO-SDT is distinguished from MT-SDT in the RACH resource partitioning. Specifically, a random access configuration (e.g., RACH-Config) sent by the RAN node 2 to the UE 1 may include a 1-bit flag (e.g., "mt-SDT") as an optional element. If the random access configuration includes this flag, the UE 1 may use the RACH resource set for the (MO-)SDT feature also for MT-SDT. Conversely, if the random access configuration does not include this flag, the UE 1 checks whether a separate RACH resource set (or partition, or pool) is configured for MT-SDT and, if so, uses the separate RACH resource set for MT-SDT. If the flag is not included in the random access configuration and no separate RACH resource set is configured for MT-SDT, the UE 1 may understand that MT-SDT is not supported. In this case, if the UE 1 triggers MT-SDT, the UE 1 may use the RACH resource set for the (MO-)SDT feature also for MT-SDT, or use a RACH resource set similar to that of Release 15 and/or Release 16 also for MT-SDT.

In the example embodiments described above, if a configuration (e.g., Random Access Configuration) received via RRC signaling (e.g., SIB) contains a configuration, information, or field related to a feature (e.g., Release 17 feature) that the UE 1 does not support, the UE 1 may act to not ignore the values (or code points) in that configuration, information, or field.

For example, the UE 1 may recognize the size of a RACH resource set (or partition) for its desired feature or feature combination based on the value of the first ra-PreambleStartIndex field for the feature or feature combination it desires and the value of the second ra-PreambleStartIndex field for another feature or feature combination immediately following it. In this case, whether or not the UE 1 supports the feature or feature combination associated with the second ra-PreambleStartIndex field, it should not ignore the value of the second ra-PreambleStartIndex field.

In some of the above example embodiments, the UE 1 may perform a different operation (or process) for a particular feature or a feature combination including it than in the above example embodiments. For example, with respect to uplink carrier selection, the uplink carrier (e.g., NUL carrier) to be selected may be predetermined (or specified in the standard) for a particular feature (e.g., RedCap) or feature combination including it. This is useful to take full advantage of the feature's functionality or to account for any limitations in the feature's functionality.

In some of the above example embodiments, the UE 1 may perform a different operation (or process) for a particular feature or a feature combination including it than in the above example embodiments. For example, with respect to a particular feature (e.g., coverage enhancement), after uplink carrier selection, the UE 1 may decide whether or not the feature is needed (or whether or not to perform the feature). This is useful in cases where the functionality of the feature depends on the result of the uplink carrier selection.

The above-described example embodiments are merely examples of applications of the technical ideas obtained by the inventor. These technical ideas are not limited to the above-described example embodiments and various modifications can be made thereto.

For example, the whole or part of the example embodiments disclosed above can be described as, but not limited to, the following supplementary notes.

### (Supplementary Note 1)

A radio terminal comprising:
at least one memory; and
at least one processor coupled to the at least one memory and configured to:
   select, from a plurality of beam-formed beams, a beam having a Reference Signal Received Power (RSRP) greater than a first RSRP threshold associated with a selected, desired, or intended feature or feature combination; and
   perform a random access preamble transmission using a first random access resource corresponding to the selected beam, wherein
the feature is Reduced Capability (RedCap), Small Data Transmission (SDT), Coverage Enhancement (CovEnh), or Slicing, and
the feature combination includes at least two of RedCap, SDT, CovEnh, or Slicing.

### (Supplementary Note 2)

The radio terminal according to Supplementary Note 1, wherein the at least one processor is configured to perform beam selection using a second RSRP threshold not associated with the feature or the feature combination if no beam has an RSRP greater than the first RSRP threshold.

### (Supplementary Note 3)

The radio terminal according to Supplementary Note 1 or 2, wherein the at least one processor is configured to perform beam selection using a third RSRP threshold associated with a feature subset included in the feature combination if no beam has an RSRP greater than the first RSRP threshold.

### (Supplementary Note 4)

The radio terminal according to any one of Supplementary Notes 1 to 3, wherein the at least one processor is configured to perform random access resource selection prior to random access preamble retransmission if random access response reception or contention resolution is not successful after transmission of the first random access resource,
wherein the random access resource selection includes retrying to select a beam having an RSRP greater than the first RSRP threshold.

### (Supplementary Note 5)

The radio terminal according to any one of Supplementary Notes 1 to 4, wherein the at least one processor is configured to:
receive, from the radio access network node, a plurality of RSRP thresholds, each associated with one of a plurality of features or with one of one or more combinations of two or more features included in the plurality of features; and
select the first RSRP threshold from the plurality of RSRP thresholds,
wherein the plurality of features includes at least two of RedCap, SDT, CovEnh, or Slicing.

### (Supplementary Note 6)

The radio terminal according to any one of Supplementary Notes 1 to 5, wherein
the plurality of beams are associated with different Synchronization Signal (SS)/Physical Broadcast Channel (PBCH) blocks (SSBs) from each other, and
the beam selection is performed by the at least one processor by selecting an SSB.

### (Supplementary Note 7)

The radio terminal according to any one of Supplementary Notes 1 to 6, wherein the at least one processor is configured to:
if both a Normal Uplink (NUL) carrier and a Supplementary Uplink (SUL) carrier support the feature or the feature combination, select one of the NUL carrier and the SUL carrier based on a downlink measurement result, otherwise select one of the NUL carrier and the SUL carrier that supports the feature or the feature combination; and
select the first random access resource from a set of random access resources associated with the selected uplink carrier.

### (Supplementary Note 8)

The radio terminal according to any one of Supplementary Notes 1 to 6, wherein the at least one processor is configured to:
select an uplink carrier from a Normal Uplink (NUL) carrier and a Supplementary Uplink (SUL) carrier based on a downlink measurement result; and
if the selected uplink carrier does not support the feature combination, select the first random access resource from a set of random access resources associated with a feature subset included in the feature combination.

### (Supplementary Note 9)

The radio terminal according to any one of Supplementary Notes 1 to 8, wherein the at least one processor is configured to:
if a first set of random access resources associated with the feature combination is configured, select the first random access resource from the first set; and
if the first set is not configured, select the first random access resource from a second set of random access resources associated with a feature subset included in the feature combination.

### (Supplementary Note 10)

The radio terminal according to any one of Supplementary Notes 1 to 8, wherein the at least one processor is configured to:
if a first set of random access resources associated with the feature or the feature combination is configured, select the first random access resource from the first set; and
if the first set is not configured, select the first random access resource from a second set of random access resources not associated with the feature or the feature combination.

### (Supplementary Note 11)

A method performed by a radio terminal, the method comprising:
selecting, from a plurality of beam-formed beams, a beam having a Reference Signal Received Power (RSRP) greater than a first RSRP threshold associated with a selected, desired, or intended feature or feature combination; and
performing a random access preamble transmission using a first random access resource corresponding to the selected beam, wherein
the feature is Reduced Capability (RedCap), Small Data Transmission (SDT), Coverage Enhancement (CovEnh), or Slicing, and
the feature combination includes at least two of RedCap, SDT, CovEnh, or Slicing.

### (Supplementary Note 12)

A program for causing a computer to perform a method for a radio terminal, the method comprising:
selecting, from a plurality of beam-formed beams, a beam having a Reference Signal Received Power (RSRP) greater than a first RSRP threshold associated with a selected, desired, or intended feature or feature combination; and
performing a random access preamble transmission using a first random access resource corresponding to the selected beam, wherein
the feature is Reduced Capability (RedCap), Small Data Transmission (SDT), Coverage Enhancement (CovEnh), or Slicing, and
the feature combination includes at least two of RedCap, SDT, CovEnh, or Slicing.

### (Supplementary Note 13)

A radio access network node comprising:
at least one memory; and
at least one processor coupled to the at least one memory and configured to broadcast in a cell a first Reference Signal Received Power (RSRP) threshold associated with a feature or a feature combination, wherein
the first RSRP threshold is used by a radio terminal to select a beam having an RSRP greater than the first RSRP threshold from a plurality of beam-formed beams and to perform a random access preamble transmission using a first random access resource corresponding to the selected beam,
the feature is Reduced Capability (RedCap), Small Data Transmission (SDT), Coverage Enhancement (CovEnh), or Slicing, and
the feature combination includes at least two of RedCap, SDT, CovEnh, or Slicing.

### (Supplementary Note 14)

The radio access network node according to Supplementary Note 13, wherein the at least one processor is configured to broadcast a plurality of RSRP thresholds, including the first RSRP threshold,
wherein each of the plurality of RSRP thresholds is associated with one of a plurality of features or with one of one or more combinations of two or more features included in the plurality of features,
wherein the plurality of features includes at least two of RedCap, SDT, CovEnh, or Slicing.

### (Supplementary Note 15)

A method performed by a radio access network node, the method comprising:
broadcasting in a cell a first Reference Signal Received Power (RSRP) threshold associated with a feature or a feature combination, wherein
the first RSRP threshold is used by a radio terminal to select a beam having an RSRP greater than the first RSRP threshold from a plurality of beam-formed beams and to perform a random access preamble transmission using a first random access resource corresponding to the selected beam,
the feature is Reduced Capability (RedCap), Small Data Transmission (SDT), Coverage Enhancement (CovEnh), or Slicing, and
the feature combination includes at least two of RedCap, SDT, CovEnh, or Slicing.

### (Supplementary Note 16)

A program for causing a computer to perform a method for a radio access network node,
the method comprising broadcasting in a cell a first Reference Signal Received Power (RSRP) threshold associated with a feature or a feature combination, wherein
the first RSRP threshold is used by a radio terminal to select a beam having an RSRP greater than the first RSRP threshold from a plurality of beam-formed beams and to perform a random access preamble transmission using a first random access resource corresponding to the selected beam,
the feature is Reduced Capability (RedCap), Small Data Transmission (SDT), Coverage Enhancement (CovEnh), or Slicing, and
the feature combination includes at least two of RedCap, SDT, CovEnh, or Slicing.

### (Supplementary Note 17)

A radio terminal comprising:
at least one memory; and
at least one processor coupled to the at least one memory and configured to:
   if both a Normal Uplink (NUL) carrier and a Supplementary Uplink (SUL) carrier support a selected, desired, or intended feature or feature combination, select one of the NUL carrier and the SUL carrier based on a downlink measurement result, otherwise select one of the NUL carrier and the SUL carrier that supports the feature or the feature combination; and
   perform a random access preamble transmission using a random access resource associated with the selected uplink carrier.

### (Supplementary Note 18)

The radio terminal according to Supplementary Note 17, wherein
the feature is Reduced Capability (RedCap), Small Data Transmission (SDT), Coverage Enhancement (CovEnh), or Slicing, and
the feature combination includes at least two of RedCap, SDT, CovEnh, or Slicing.

### (Supplementary Note 19)

A method performed by a radio terminal, the method comprising:
if both a Normal Uplink (NUL) carrier and a Supplementary Uplink (SUL) carrier support a selected, desired, or intended feature or feature combination, selecting one of the NUL carrier and the SUL carrier based on a downlink measurement result, otherwise selecting one of the NUL carrier and the SUL carrier that supports the feature or the feature combination; and
performing a random access preamble transmission using a random access resource associated with the selected uplink carrier.

### (Supplementary Note 20)

A program for causing a computer to perform a method for a radio terminal, the method comprising:
if both a Normal Uplink (NUL) carrier and a Supplementary Uplink (SUL) carrier support a selected, desired, or intended feature or feature combination, selecting one of the NUL carrier and the SUL carrier based on a downlink measurement result, otherwise selecting one of the NUL carrier and the SUL carrier that supports the feature or the feature combination; and
performing a random access preamble transmission using a random access resource associated with the selected uplink carrier.

### (Supplementary Note 21)

A radio terminal comprising:
at least one memory; and
at least one processor coupled to the at least one memory and configured to:
   select an uplink carrier from a Normal Uplink (NUL) carrier and a Supplementary Uplink (SUL) carrier based on a downlink measurement result; and
   if the selected uplink carrier does not support a selected, desired, or intended feature combination, perform a random access preamble transmission using a random access resource associated with a feature subset included in the feature combination.

### (Supplementary Note 22)

The radio terminal according to Supplementary Note 21, wherein the at least one processor is configured to perform a random access preamble transmission using a random access resource associated with the feature combination if the selected uplink carrier supports the feature combination.

### (Supplementary Note 23)

The radio terminal according to Supplementary Note 21 or 22, wherein the feature combination includes at least two of Reduced Capability (RedCap), Small Data Transmission (SDT), Coverage Enhancement (CovEnh), or Slicing.

### (Supplementary Note 24)

A method performed by a radio terminal, the method comprising:
selecting an uplink carrier from a Normal Uplink (NUL) carrier and a Supplementary Uplink (SUL) carrier based on a downlink measurement result; and
if the selected uplink carrier does not support a selected, desired, or intended feature combination, performing a random access preamble transmission using a random access resource associated with a feature subset included in the feature combination.

### (Supplementary Note 25)

A program for causing a computer to perform a method for a radio terminal, the method comprising:
selecting an uplink carrier from a Normal Uplink (NUL) carrier and a Supplementary Uplink (SUL) carrier based on a downlink measurement result; and
if the selected uplink carrier does not support a selected, desired, or intended feature combination, performing a random access preamble transmission using a random access resource associated with a feature subset included in the feature combination.

### (Supplementary Note 26)

A radio terminal comprising:
at least one memory; and
at least one processor coupled to the at least one memory and configured to:
   if a first set of random access resources associated with a selected, desired, or intended feature combination is configured, perform a random access preamble transmission using a random access resource selected from the first set; and
   if the first set is not configured, perform a random access preamble transmission using a random access resource selected from a second set of random access resources associated with a feature subset included in the feature combination.

### (Supplementary Note 27)

The radio terminal according to Supplementary Note 26, wherein the feature combination includes at least two of Reduced Capability (RedCap), Small Data Transmission (SDT), Coverage Enhancement (CovEnh), or Slicing.

### (Supplementary Note 28)

A method performed by a radio terminal, the method comprising:
if a first set of random access resources associated with a selected, desired, or intended feature combination is configured, performing a random access preamble transmission using a random access resource selected from the first set; and
if the first set is not configured, performing a random access preamble transmission using a random access resource selected from a second set of random access resources associated with a feature subset included in the feature combination.

### (Supplementary Note 29)

A program for causing a computer to perform a method for a radio terminal, the method comprising:
if a first set of random access resources associated with a selected, desired, or intended feature combination is configured, performing a random access preamble transmission using a random access resource selected from the first set; and
if the first set is not configured, performing a random access preamble transmission using a random access resource selected from a second set of random access resources associated with a feature subset included in the feature combination.

### (Supplementary Note 30)

A radio terminal comprising:
at least one memory; and
at least one processor coupled to the at least one memory and configured to:
   if a first set of random access resources associated with a selected, desired, or intended feature or feature combination is configured, perform a random access preamble transmission using a random access resource selected from the first set; and
   if the first set is not configured, perform a random access preamble transmission using a random access resource selected from a second set of random access resources not associated with the feature or the feature combination.

### (Supplementary Note 31)

The radio terminal according to Supplementary Note 30, wherein
the feature is Reduced Capability (RedCap), Small Data Transmission (SDT), Coverage Enhancement (CovEnh), or Slicing, and
the feature combination includes at least two of RedCap, SDT, CovEnh, or Slicing.

### (Supplementary Note 32)

A method performed by a radio terminal, the method comprising:
if a first set of random access resources associated with a selected, desired, or intended feature or feature combination is configured, performing a random access preamble transmission using a random access resource selected from the first set; and
if the first set is not configured, performing a random access preamble transmission using a random access resource selected from a second set of random access resources not associated with the feature or the feature combination.

### (Supplementary Note 33)

A program for causing a computer to perform a method for a radio terminal, the method comprising:
if a first set of random access resources associated with a selected, desired, or intended feature or feature combination is configured, performing a random access preamble transmission using a random access resource selected from the first set; and
if the first set is not configured, performing a random access preamble transmission using a random access resource selected from a second set of random access resources not associated with the feature or the feature combination.

This application is based upon and claims the benefit of priority from Japanese Patent Application No. 2021-171920, filed on October 20, 2021, the disclosure of which is incorporated herein in its entirety by reference.

### Reference Signs List

- 1: UE
- 2: RAN Node
- 21: Cell
- 1203: Baseband Processor
- 1204: Application Processor
- 1206: Memory
- 1207: Modules
- 1304: Processor
- 1305: Memory
- 1306: Modules

## Claims

1. A radio terminal comprising:
at least one memory; and
at least one processor coupled to the at least one memory and configured to:
select, from a plurality of beam-formed beams, a beam having a Reference Signal Received Power (RSRP) greater than a first RSRP threshold associated with a selected, desired, or intended feature or feature combination; and
perform a random access preamble transmission using a first random access resource corresponding to the selected beam,
wherein
the feature is Reduced Capability (RedCap), Small Data Transmission (SDT), Coverage Enhancement (CovEnh), or Slicing, and
the feature combination includes at least two of RedCap, SDT, CovEnh, or Slicing.

2. The radio terminal according to claim 1, wherein the at least one processor is configured to perform beam selection using a second RSRP threshold not associated with the feature or the feature combination if no beam has an RSRP greater than the first RSRP threshold.

3. The radio terminal according to claim 1 or 2, wherein the at least one processor is configured to perform beam selection using a third RSRP threshold associated with a feature subset included in the feature combination if no beam has an RSRP greater than the first RSRP threshold.

4. The radio terminal according to any one of claims 1 to 3,
wherein the at least one processor is configured to perform random access resource selection prior to random access preamble retransmission if random access response reception or contention resolution is not successful after transmission of the first random access resource,
wherein the random access resource selection includes retrying to select a beam having an RSRP greater than the first RSRP threshold.

5. The radio terminal according to any one of claims 1 to 4,
wherein the at least one processor is configured to:
receive, from the radio access network node, a plurality of RSRP thresholds, each associated with one of a plurality of features or with one of one or more combinations of two or more features included in the plurality of features; and
select the first RSRP threshold from the plurality of RSRP thresholds,
wherein the plurality of features includes at least two of RedCap, SDT, CovEnh, or Slicing.

6. The radio terminal according to any one of claims 1 to 5,
wherein
the plurality of beams are associated with different Synchronization Signal (SS)/Physical Broadcast Channel (PBCH) blocks (SSBs) from each other, and
the beam selection is performed by the at least one processor by selecting an SSB.

7. The radio terminal according to any one of claims 1 to 6,
wherein the at least one processor is configured to:
if both a Normal Uplink (NUL) carrier and a Supplementary Uplink (SUL) carrier support the feature or the feature combination, select one of the NUL carrier and the SUL carrier based on a downlink measurement result, otherwise select one of the NUL carrier and the SUL carrier that supports the feature or the feature combination; and
select the first random access resource from a set of random access resources associated with the selected uplink carrier.

8. The radio terminal according to any one of claims 1 to 6,
wherein the at least one processor is configured to:
select an uplink carrier from a Normal Uplink (NUL) carrier and a Supplementary Uplink (SUL) carrier based on a downlink measurement result; and
if the selected uplink carrier does not support the feature combination, select the first random access resource from a set of random access resources associated with a feature subset included in the feature combination.

9. The radio terminal according to any one of claims 1 to 8,
wherein the at least one processor is configured to:
if a first set of random access resources associated with the feature combination is configured, select the first random access resource from the first set; and
if the first set is not configured, select the first random access resource from a second set of random access resources associated with a feature subset included in the feature combination.

10. The radio terminal according to any one of claims 1 to 8,
wherein the at least one processor is configured to:
if a first set of random access resources associated with the feature or the feature combination is configured, select the first random access resource from the first set; and
if the first set is not configured, select the first random access resource from a second set of random access resources not associated with the feature or the feature combination.

11. A method performed by a radio terminal, the method comprising:
selecting, from a plurality of beam-formed beams, a beam having a Reference Signal Received Power (RSRP) greater than a first RSRP threshold associated with a selected, desired, or intended feature or feature combination; and
performing a random access preamble transmission using a first random access resource corresponding to the selected beam, wherein
the feature is Reduced Capability (RedCap), Small Data Transmission (SDT), Coverage Enhancement (CovEnh), or Slicing, and
the feature combination includes at least two of RedCap, SDT, CovEnh, or Slicing.

12. A non-transitory computer-readable medium storing a program for causing a computer to perform a method for a radio terminal, the method comprising:
selecting, from a plurality of beam-formed beams, a beam having a Reference Signal Received Power (RSRP) greater than a first RSRP threshold associated with a selected, desired, or intended feature or feature combination; and
performing a random access preamble transmission using a first random access resource corresponding to the selected beam, wherein
the feature is Reduced Capability (RedCap), Small Data Transmission (SDT), Coverage Enhancement (CovEnh), or Slicing, and
the feature combination includes at least two of RedCap, SDT, CovEnh, or Slicing.

13. A radio access network node comprising:
at least one memory; and
at least one processor coupled to the at least one memory and configured to broadcast in a cell a first Reference Signal Received Power (RSRP) threshold associated with a feature or a feature combination, wherein
the first RSRP threshold is used by a radio terminal to select a beam having an RSRP greater than the first RSRP threshold from a plurality of beam-formed beams and to perform a random access preamble transmission using a first random access resource corresponding to the selected beam,
the feature is Reduced Capability (RedCap), Small Data Transmission (SDT), Coverage Enhancement (CovEnh), or Slicing, and
the feature combination includes at least two of RedCap, SDT, CovEnh, or Slicing.

14. The radio access network node according to claim 13, wherein the at least one processor is configured to broadcast a plurality of RSRP thresholds, including the first RSRP threshold,
wherein each of the plurality of RSRP thresholds is associated with one of a plurality of features or with one of one or more combinations of two or more features included in the plurality of features,
wherein the plurality of features includes at least two of RedCap, SDT, CovEnh, or Slicing.

15. A method performed by a radio access network node, the method comprising:
broadcasting in a cell a first Reference Signal Received Power (RSRP) threshold associated with a feature or a feature combination, wherein
the first RSRP threshold is used by a radio terminal to select a beam having an RSRP greater than the first RSRP threshold from a plurality of beam-formed beams and to perform a random access preamble transmission using a first random access resource corresponding to the selected beam,
the feature is Reduced Capability (RedCap), Small Data Transmission (SDT), Coverage Enhancement (CovEnh), or Slicing, and
the feature combination includes at least two of RedCap, SDT, CovEnh, or Slicing.

16. A non-transitory computer-readable medium storing a program for causing a computer to perform a method for a radio access network node,
the method comprising broadcasting in a cell a first Reference Signal Received Power (RSRP) threshold associated with a feature or a feature combination, wherein
the first RSRP threshold is used by a radio terminal to select a beam having an RSRP greater than the first RSRP threshold from a plurality of beam-formed beams and to perform a random access preamble transmission using a first random access resource corresponding to the selected beam,
the feature is Reduced Capability (RedCap), Small Data Transmission (SDT), Coverage Enhancement (CovEnh), or Slicing, and
the feature combination includes at least two of RedCap, SDT, CovEnh, or Slicing.

17. A radio terminal comprising:
at least one memory; and
at least one processor coupled to the at least one memory and configured to:
if both a Normal Uplink (NUL) carrier and a Supplementary Uplink (SUL) carrier support a selected, desired, or intended feature or feature combination, select one of the NUL carrier and the SUL carrier based on a downlink measurement result, otherwise select one of the NUL carrier and the SUL carrier that supports the feature or the feature combination; and
perform a random access preamble transmission using a random access resource associated with the selected uplink carrier.

18. The radio terminal according to claim 17, wherein
the feature is Reduced Capability (RedCap), Small Data Transmission (SDT), Coverage Enhancement (CovEnh), or Slicing, and
the feature combination includes at least two of RedCap, SDT, CovEnh, or Slicing.

19. A method performed by a radio terminal, the method comprising:
if both a Normal Uplink (NUL) carrier and a Supplementary Uplink (SUL) carrier support a selected, desired, or intended feature or feature combination, selecting one of the NUL carrier and the SUL carrier based on a downlink measurement result, otherwise selecting one of the NUL carrier and the SUL carrier that supports the feature or the feature combination; and
performing a random access preamble transmission using a random access resource associated with the selected uplink carrier.

20. A non-transitory computer-readable medium storing a program for causing a computer to perform a method for a radio terminal, the method comprising:
if both a Normal Uplink (NUL) carrier and a Supplementary Uplink (SUL) carrier support a selected, desired, or intended feature or feature combination, selecting one of the NUL carrier and the SUL carrier based on a downlink measurement result, otherwise selecting one of the NUL carrier and the SUL carrier that supports the feature or the feature combination; and
performing a random access preamble transmission using a random access resource associated with the selected uplink carrier.

21. A radio terminal comprising:
at least one memory; and
at least one processor coupled to the at least one memory and configured to:
select an uplink carrier from a Normal Uplink (NUL) carrier and a Supplementary Uplink (SUL) carrier based on a downlink measurement result; and
if the selected uplink carrier does not support a selected, desired, or intended feature combination, perform a random access preamble transmission using a random access resource associated with a feature subset included in the feature combination.

22. The radio terminal according to claim 21, wherein the at least one processor is configured to perform a random access preamble transmission using a random access resource associated with the feature combination if the selected uplink carrier supports the feature combination.

23. The radio terminal according to claim 21 or 22, wherein the feature combination includes at least two of Reduced Capability (RedCap), Small Data Transmission (SDT), Coverage Enhancement (CovEnh), or Slicing.

24. A method performed by a radio terminal, the method comprising:
selecting an uplink carrier from a Normal Uplink (NUL) carrier and a Supplementary Uplink (SUL) carrier based on a downlink measurement result; and
if the selected uplink carrier does not support a selected, desired, or intended feature combination, performing a random access preamble transmission using a random access resource associated with a feature subset included in the feature combination.

25. A non-transitory computer-readable medium storing a program for causing a computer to perform a method for a radio terminal, the method comprising:
selecting an uplink carrier from a Normal Uplink (NUL) carrier and a Supplementary Uplink (SUL) carrier based on a downlink measurement result; and
if the selected uplink carrier does not support a selected, desired, or intended feature combination, performing a random access preamble transmission using a random access resource associated with a feature subset included in the feature combination.

26. A radio terminal comprising:
at least one memory; and
at least one processor coupled to the at least one memory and configured to:
if a first set of random access resources associated with a selected, desired, or intended feature combination is configured, perform a random access preamble transmission using a random access resource selected from the first set; and
if the first set is not configured, perform a random access preamble transmission using a random access resource selected from a second set of random access resources associated with a feature subset included in the feature combination.

27. The radio terminal according to claim 26, wherein the feature combination includes at least two of Reduced Capability (RedCap), Small Data Transmission (SDT), Coverage Enhancement (CovEnh), or Slicing.

28. A method performed by a radio terminal, the method comprising:
if a first set of random access resources associated with a selected, desired, or intended feature combination is configured, performing a random access preamble transmission using a random access resource selected from the first set; and
if the first set is not configured, performing a random access preamble transmission using a random access resource selected from a second set of random access resources associated with a feature subset included in the feature combination.

29. A non-transitory computer-readable medium storing a program for causing a computer to perform a method for a radio terminal, the method comprising:
if a first set of random access resources associated with a selected, desired, or intended feature combination is configured, performing a random access preamble transmission using a random access resource selected from the first set; and
if the first set is not configured, performing a random access preamble transmission using a random access resource selected from a second set of random access resources associated with a feature subset included in the feature combination.

30. A radio terminal comprising:
at least one memory; and
at least one processor coupled to the at least one memory and configured to:
if a first set of random access resources associated with a selected, desired, or intended feature or feature combination is configured, perform a random access preamble transmission using a random access resource selected from the first set; and
if the first set is not configured, perform a random access preamble transmission using a random access resource selected from a second set of random access resources not associated with the feature or the feature combination.

31. The radio terminal according to claim 30, wherein
the feature is Reduced Capability (RedCap), Small Data Transmission (SDT), Coverage Enhancement (CovEnh), or Slicing, and
the feature combination includes at least two of RedCap, SDT, CovEnh, or Slicing.

32. A method performed by a radio terminal, the method comprising:
if a first set of random access resources associated with a selected, desired, or intended feature or feature combination is configured, performing a random access preamble transmission using a random access resource selected from the first set; and
if the first set is not configured, performing a random access preamble transmission using a random access resource selected from a second set of random access resources not associated with the feature or the feature combination.

33. A non-transitory computer-readable medium storing a program for causing a computer to perform a method for a radio terminal, the method comprising:
if a first set of random access resources associated with a selected, desired, or intended feature or feature combination is configured, performing a random access preamble transmission using a random access resource selected from the first set; and
if the first set is not configured, performing a random access preamble transmission using a random access resource selected from a second set of random access resources not associated with the feature or the feature combination.
